(19) Europäisches Patentamt
European Patent Office
Office européen des brevets

(11) Numéro de publication: **0 291 427**
**B1**

(12) **FASCICULE DE BREVET EUROPEEN**

(45) Date de publication du fascicule du brevet: **16.01.91**

(51) Int. Cl.$^5$: **C 09 K 19/40,** C 08 C 19/00

(21) Numéro de dépôt: **88420154.2**

(22) Date de dépôt: **09.05.88**

(54) **Nouveaux polymères cristaux liquides à groupes mésogènes latéraux issus de polymères à insaturations éthyléniques et leur procédé de fabrication.**

(30) Priorité: **13.05.87 FR 8707014**

(43) Date de publication de la demande:
**17.11.88 Bulletin 88/46**

(45) Mention de la délivrance du brevet:
**16.01.91 Bulletin 91/03**

(84) Etats contractants désignés:
**AT BE CH DE ES FR GB IT LI LU NL SE**

(56) Documents cités:
**US-A-3 470 226**
**MOLECULAR CRYSTALS AND LIQUID CRYSTALS + LETTERS, vol. 1, no. 3/4, 1985, pages 75-81, Gordon and Breach, Science Publishers, Inc. and OPA Ltd, New York, US; H.J. COLES et al.: "Investigations of smetic polysiloxanes 3 - ultra high contrast smectic polymer storage effect"**
**MAKROMOLECULARE CHEMIE, vol. 183, 1982, pages 1245-1256; H. RINGSDORF et al.: "Liquid crystalline side chain polymers and their behaviour in the electric field"**

(73) Titulaire: **RHONE-POULENC CHIMIE**
**25, quai Paul Doumer**
**F-92408 Courbevoie Cédex (FR)**

(72) Inventeur: **Fontanille, Michel**
**14, rue Marcelin-Berthelot**
**F-33400 Talence (FR)**
Inventeur: **Gilli, Jean-Marc**
**"Le Verger" - 9, avenue Georges V**
**F-06000 Nice (FR)**
Inventeur: **Robert, Patrice**
**Résidence "Les Fleurentines" Rue Béranger**
**F-64400 Bethune (FR)**
Inventeur: **Sixou, Pierre**
**98, avenue des Hespérides**
**F-06300 Nice (FR)**
Inventeur: **Villenave, Jean-Jacques**
**12, allée de Lanquais**
**F-33170 Gradignan (FR)**

(74) Mandataire: **Trolliet, Maurice et al**
**RHONE-POULENC INTERSERVICES Service Brevets Chimie Centre de Recherches des Carrières B.P. 62**
**F-69192 Saint-Fons Cédex (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

**EP 0 291 427 B1**

(56) Documents cités:
"Advances in polymer science, Liquid crystal polymers II/III", 1984, pages 173-180, édité par M. GORDON, Springer-Verlag, Berlin, DE; V.P. SHIBAEV et al.: "Thermotropic liquid-crystalline polymers with mesogenic side groups"

## Description

La présente invention concerne des polymères cristaux liquides de type "peigne", c'est à dire portant des groupes mésogènes latéraux et un procédé de fabrication de ces polymères.

Plus précisément elle a trait à des polymères cristaux liquide comportant:

— un squelette consistant dans une chaine éventuellement

— difonctionnelle contenant des insaturations éthyléniques dont au moins une partie consiste dans des insaturations éthyléniques de type vinylique pendantes, et

— des groupes mésogènes greffés sur au moins une partie des insaturations éthyléniques de type vinylique par l'intermédiaire de liaisons de type silylalkylèneoxy (chaque liaison de ce type sera appelé dans ce qui suit par le terme "espaceur").

Il est connu, d'après la demande de brevet français FR—A—2.573.082, des polymères cristaux liquides du type peigne portant des groupes mésogènes latéraux dans lesquels le squelette est un polyacrylate. De même, sont connus, d'après le brevet américain US—A—4.358.391, des polymères de ce type à squelette polysiloxane.

Travaillant dans ce domaine de la technique, la Demanderesse a mis au point, et c'est ce qui constitue le premier objet de la présente invention, une nouvelle famille de polymères cristaux liquides du type peigne dont la nature chimique du squelette permet notamment:

— l'utilisation de tout groupe mésogène souhaité,

— l'insertion d'un espaceur plus ou moins long entre le squelette et chaque groupe mésogène,

— l'addition, sur un même squelette, de groupes mésogènes de natures différentes par l'intermédiaire d'espaceurs ayant éventuellement des longuers différentes,

— une variation aisée du taux de greffage pour un groupe mésogène et un espaceur donné,

— une réticulation plus ou moins poussée des polymères cristaux liquides préparés conduisant à des matériaux durcis ou possédant des propriétés élastiques.

Plus précisément, la présente invention, dans son premier objet, concerne des polymères cristaux liquides portant des groupes mésogènes latéraux, caratérisés en ce qu'ils répondent essentiellement à la formule générale:

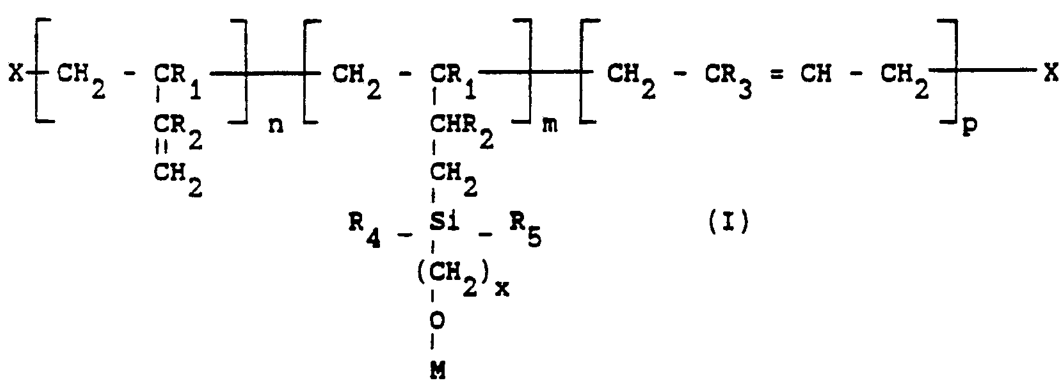

(I)

dans laquelle:

les symboles X, identiques ou différents, représentent chacun un atome d'hydrogène ou un groupe fonctionnel terminal hydroxyle, carboxyle ou amino;

— $R_1$, $R_2$ et $R_3$, identiques ou différents, représentent chacun un atome d'hydrogène, un atome de chlore ou un radical méthyle;

— $R_4$ et $R_5$, identiques ou différents, représentent chacun un radical hydrocarboné monovalent choisi parmi: les radicaux alkyles, linéaires ou ramifiés, ayant de 1 à 6 atomes de carbone; un radical phényle éventuellement substitué par un ou plusieurs radicaux alkyles et/ou alkoxy ayant de 1 à 4 atomes de carbone;

— les symboles M, identique ou différents, représent chacun un groupe mésogène proprement dit ou un groupe susceptible de générer la propriété mésogène après greffage;

— les symboles n, m et p, identiques ou différents, représentent les nombres moyens des différentes unités de récurrence disposées statistiquement, ces nombres étant liés entre eux par les relations suivantes:

* la somme $n + m + p$ se situe dans l'intervalle allant de 10 à 20000,

* le rapport $r_1 = p/(n + m + p)$ se situe dans l'intervalle allant de 0 à 0,9, et

* le rapport $r_2 = m/(n + m)$ se situe dans l'intervalle allant de 0,1 à 1;

— le symbole x est un nombre entier situé dans l'intervalle allant de 0 à 8.

Du fait de la structure souple de leur squelette, les polymères de formule (I) peuvent présenter une température de transition vitreuse Tg se situant dans un large intervalle allant de −50°C à 150°C. Néanmoins, il est possible de réaliser des polymères de cristallinité plus ou moins importante dont la Tg devient, pour les espèces fortement cristallines, difficilement décelable.

Dans les polymères de formule (I), il doit être compris que les unités récurrentes de formule:

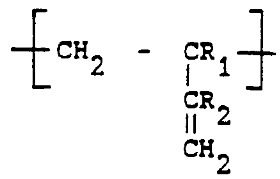

peuvent être, suivant la nature des symboles $R_1$ et $R_2$, identiques ou différentes entre elles. La même remarque doit s'appliquer aussi aux unités récurrentes de formule:

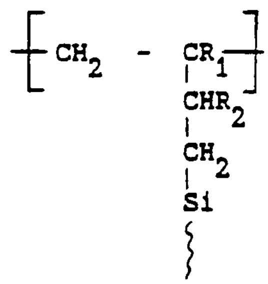

Les molécules, dont dérivent les groupes M mésogènes proprement dits, sont des substances qui donnent naissance, dans une plage donnée de températures, à des structures nématiques et/ou smectiques et/ou chlolestériques. Des molécules ce de type sont bien connues et décrites dans la littérature; on se rapportera par exemple à l'ouvrage: "Handbook of Liquid Cristal" de H. Kelker et R. Hatz, édité par Verlag Chemie, année 1980, pages 67 à 113.

Les dérivés du cyclohexane, tels que par exemple le cyclohexane dicarboxylique de phényle, l'éther de cyclohexyle et de phényle, les cyclohexylbenzènes, les composés dicyclohexyles sont des molécules mésogènes. D'autres exemples consistent dans: le biphényle substitué par un ou plusieurs radicaux alkoxy, cyano, nitro; le benzoate de phényle, un alkoxybenzoate de phényle, un benzoate d'alkoxyphényle; la benzylidèneaniline; l'azobenzène, l'azoxybenzène; des stéroïdes tels que le cholestérol et le cholestane.

Toutes les molécules mésogènes existantes dans l'état de la technique conviennent dès lors qu'elles ne sont pas sensibles aux agents basiques tels que notamment un hydroxyde ou un carbonate de métal alcalin et qu'elles peuvent être obtenues porteuses d'une fonction hydroxyle permettant leur greffage, conformément au mode opératoire indiqué dans la suite de ce mémoire, sur les insaturations vinyliques que l'on désire saturer, ledit greffage résultant dans l'établissement de l'espaceur mentionné dans la formule (I) de structure:

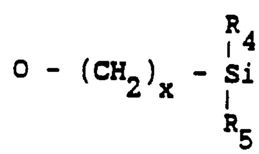

Les molécules dont dérivent les groupes M peuvent être encore des moécules qui n'ont pas par elles-mêmes de propriété mésogène, mais qui développent cette propriété une fois qu'elles sont greffées sur les insaturations vinyliques que l'on désire saturer. Comme exemple de pareilles molécules on peut citer le biphényle.

Les molécules dont dérivent les groupes M peuvent en outre être porteuses d'une caractéristique physique particulière tel que notamment un moment dipolaire important, une forte délocalisation électronique, une chiralité, ladite caractéristique existant intrinséquement ou étant apportée par une substitution adéquate.

Comme polymères cristaux liquides préférentiellement représentatifs de la présente invention, ou peut citer ceux qui répondent à la formule (I) dans laquelle:

— les symboles X, identiques ou différents, représentent chacun un groupe fonctionnel terminal hydroxyle ou carboxyle;

— $R_1$, $R_2$ et $R_3$, identiques ou différents, représentent chacun un atome d'hydrogène ou un radical méthyle;

— $R_4$ et $R_5$, identiques ou différents, représentent chacun: un radical alkyle linéaire ayant de 1 à 3 atomes de carbone, comme un radical méthyle, éthyle ou n-propyle; un radical phényle;

— les symobles M, identiques ou différents, représentent chacun un radical de formule:

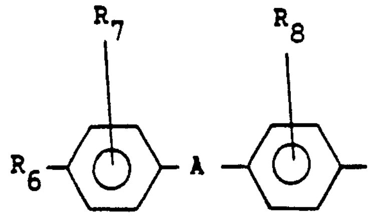

(II)

dans laquelle:

* A représente un lien valentiel simple ou un reste

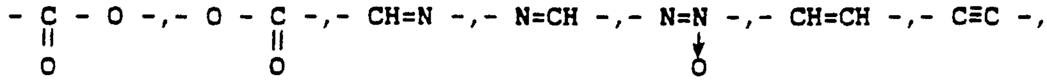

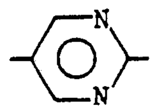

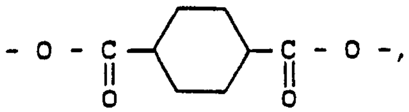

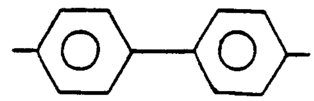

* $R_6$ représente le radical B, le radical

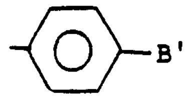

ou le radical

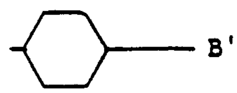

dans lequel B et B' sont chacun: un atome d'hydrogène, un reste $—O—(CH_2)_yH$, un reste $—COO(CH_2)_yH$, un reste $—CO—(CH_2)_yH$ avec y étant un nombre entier situé dans l'intervalle allant de 1 à 8, —CN ou $—NO_2$;

* $R_7$ et $R_8$, identiques ou différents, représentent chacun un atome d'hydrogène ou un radical alkyle, linéaire ou ramifié, ayant de 1 à 4 atomes de carbone;

— les symboles n, m et p représente des nombres moyens qui sont liés entre eux par les relations suivantes:

* la somme n + m + p se situe dans l'intervalle allant de 10 à 1000, et, de préférence, allant de 20 à 200,
* le rapport $r_1$ se situe dans l'intervalle allant de 0 à 0,5, et, de préférennce, allant de 0 à 0,3,
* le rapport $r_2$ se situe dans l'intervalle allant de 0,2 à 1, et, de préférence, allant de 0,4 à 1;

— le symbole x est un nombre entier situé dans l'intervalle allant de 2 à 6.

Parmi les polymères cristaux liquides appartenant à ce groupe préférentiellement représentatif, ceux qui coviennent tout particulièrement bien sont les composés dans lesquels $R_1$, $R_2$ et $R_3$ représentent un atome d'hydrogène et les symboles M, identiques ou différents, représentent chacun un groupe mésogène proprement dit répondant à la formule (II) de structure:

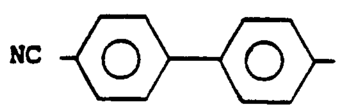

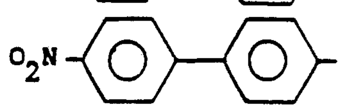

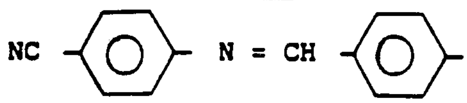

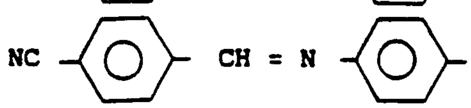

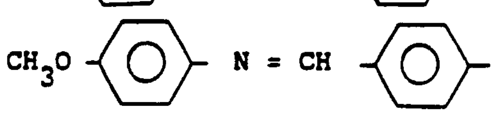

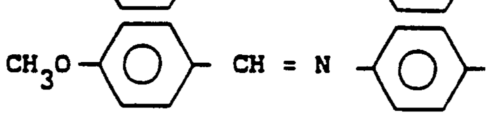

Les polymeres selon la présente invention présentent la caractéristique importante d'être thermotropes, c'est à dire qu'ils sont capables de former des phases anisotropes qui sont faciles à conformer par filage, filmage ou moulage; la thermotropie est facile à mettre en évidence lorsqu'on observe le polymère dans un système optique équipé de deux polariseurs croisés (90°): il se produit pour les échantillons anisotropes une biréfringence et une transmission de la luminère polarisée à travers les polariseurs croisés.

Une qualité particulière des polymères selon la présente invention est de former des phases de cristal liquide à une température relativement basse sans présenter le risque d'une dégradation thermique. La position par rapport à la température ambiante et l'étendue en température de la plage d'anisotropie peuvent être commodément ajustées grâce aux différents paramètres de structure suivants: valeur de la somme n + m + p, valeur des rapports $r_1$ et $r_2$, valeur de x et nature de M. La plage d'anisotropie peut s'étendre en température dans un intervalle compris entre la température de rigidification (Tg ou température de fusion) et 100°C au-dessus de cette température.

La possibilitié d'orientation des groupes M, mésogènes ou devenant mésogènes après greffage, associée à la conservation de cette orientation par trempe peuvent être uitlisées notamment pour la réalisation de composants optiques solides, de polariseur linéaires ou circulaires, de matériaux à forte non linéarité optique. De plus, étant donné la flexibilité du squelette qui peut être aisément ajustée en jouant sur le nombre p des motifs $CH_2—CR_3{=}CH—CH_2$ (un accroissement de la valeur p correspondant à une augmentation de la flexibilité), les polyméres selon la présente invention peuvent être utilisés avantageusement dans la préparation de capteurs mécaniques de force ou de pression à lecture optique.

Les polymères selon la présente invention peuvent en outre être mélangés avec des proportions variables de petités molécules mésogènes ou non mésogènes qui ne sont pas greffées, sous réserve de l'existence d'une zone demiscibilité avec le polymère thermotrope de base. L'intérêt de ces systèmes mixtes réside notamment dans la faculté de pouvoir ajuster plus aisément, dans différents dispositifs, les temps d'orientation ou de ré-orientation des phases cristal-liquide.

Le'intérêt de ces systèmes mixtes est accru avec certains polymères selon la présente invention du fait de la possibilité de réticulation du squelette au moyen d'insaturations éthyléniques non vinyliques et/ou d'insaturations vinyliques non saturées par l'ensemble espaceur + groupe mésogène M ainsi que des groupes fonctionnels terminaux X éventuels: le polymère peut être "gonflé" par une quantité importante de petites molécules dont on a parlé ci-avant.

La présente invention concerne encore, et c'est ce qui constitue le second objet de la présente invention, un procédé de préparation des polymères de formule (I).

Plus précisément, ce procédé est caractérisé en ce qu'il comprend les étapes suivantes:

(a) . faire réagir en présence d'un catalyseur d'hydrosilylation:

— (i) un polymère de formule:

$$X-\left[CH_2-\underset{\underset{CH_2}{\overset{\|}{CR_2}}}{\overset{|}{CR_1}}\right]_{n+m}-\left[CH_2-CR_3=CH-CH_2\right]_p-X \qquad (III)$$

dans laquelle les symboles X, $R_1$, $R_2$ et $R_3$, la somme n + m + p et le rapport $r_1 = p/(n + m + p)$ ont les significations générales ou préférées indiquées ci-avant à propos de la formule (I)

— sur (2i) un (bromoalkyl)diorgansilane de formule:

$$Br-(CH_2)_x-\underset{R_5}{\underset{|}{\overset{R_4}{\overset{|}{Si}}}}-H \qquad (IV)$$

dans laquelle les symboles $R_4$, $R_5$ et x ont les significations générales ou préférées indiquées ci-avant à propos de la formule (I),

— pour obtenir un polymère précurseur de formule:

$$X-\left[CH_2-\underset{\underset{CH_2}{\overset{\|}{CR_2}}}{\overset{|}{CR_1}}\right]_n-\left[CH_2-\underset{\underset{\underset{\underset{\underset{\underset{Br}{|}}{(CH_2)_x}}{|}}{R_4-Si-R_5}}{\overset{|}{CH_2}}}{\overset{|}{CHR_2}}}{\overset{|}{CR_1}}\right]_m-\left[CH_2-CR_3=CH-CH_2\right]_p-X \qquad (V)$$

dans laquelle les symboles X, $R_1$, $R_2$, $R_3$, $R_4$, $R_5$ et x, la somme n + m + p, les rapports $r_1 = p/(n + m + p)$ et $r_2 = m/(n + m)$ ont les significations générales ou préférées indiquées ci-avant à propos de la formule (I),

. puis faire précipiter ledir polymère précurseur par addition dans le milieu réactionnel d'un non solvant ou mélange de non solvants et séparer le polymère précipité du milieu réactionnel;

(b) . faire réagir ensuite en présence d'un catalyseur de transfert de phase:

— (3i) le polymère précurseur de formule (V)

— sur (4i) un réactif hydroxylé de formule:

$$M—OH \qquad (VI)$$

dans laquelle le symbole M possède les significations générales ou particulières données ci-avant à propos des formules (I) et (II),

— pour obtenir le polymère souhaité de formule (I),

. puis séparer de manière connue en soi ledit polymère résultant de formule (I) du milieu réactionnel.

Dans l'étape (a), le silane bromé de formule (IV) est additionné sur le nombre désiré d'insaturations vinyliques pendantes contenues dans le polymère de départ de formule (III). Dans les conditions opératoires choisies, les liaisons éthyléniques du type non vinylique éventuellement présentes ainsi que les éventuels groupes fonctionnels du polymère de départ ne réagissent substantiellement pas avec le silane bromé de formule (IV); les groupes fonctionnels, quand il y en a, sont donc libres pour participer, au besoin, à une polymérisation ou à une réticulation du polymère final de formule (I) en présence d'un agent tel que par exemple un polyisocyanate (comme un diisocyanate du toluène ou un diisocyanate de l'isophorone) ou un polyépoxyde.

Les polymères de départ de formule (III) convenables pour l'invention sont les polymères éventuellement α,ω-difonctionnels contenant des insaturations éthyléniques dont au moins une partie consiste dans des insaturations éthyléniques de type vinylique pendantes. On peut citer à titre d'exemple de pareils polymères convenant bien, les polyméres α,ω-difonctionnels obtenus par polymérisation ou copolymérisation de composés diéniques tels que notamment: les polybutadiènes à polymérisations 1—2 et 1—4 et dans ce cas, dans la formule (III), les symboles $R_1$, $R_2$ et $R_3$ sont identiques et représentent un atome d'hydrogène; les polyisoprènes à polymérisations 1—2, 3—4, et 1—4 et dans ce cas, dans la formule (III) considérée, les unités de récurrence à insaturation vinylique pendante sont constitutées en général par un mélange d'unités dans lesquelles $R_1 = CH_3$ et $R_2 = H$ avec des unités dans lesquelles $R_1 = H$ et $R_2 = CH_3$, tandis que les unités de récurrence à insaturation non vinylique sont identiques entre elles avec $R_3 = CH_3$. Les polymères qui conviennent tout particulièrement bien sont les polybutadiènes hydroxy ou carboxy-téléchéliques comprenant des insaturations de type vinylique pendantes.

La réaction d'hydrosilyation de l'étape (a) peut être conduite en milieu hétérogène et sans solvant ou en milieu homogène par addition aux réactifs de départ d'un solvant ou mélange de solvants communs au polymère de formule (III) et au silane bromé de formule (IV). Les solvants préférés sont le tétrahydrofuranne, le benzène, le toluène, l'hexane, le tétrachlorure de carbone. Cette réaction d'hydrosilyation est coduite à une température allant de la température ambiante (23°) à 70°C. Généralement le nombre de moles de silane bromé de formule (IV) ajouté par mole de polymère de formule (III) et égal au nombre d'insaturations de type vinylique pendantes contenues dans une mole de polymère sur lesquelles on désire additionner ledit silane bromé augmenté éventuellement d'un excès de 5 à 15% dans le cas où l'on souhaite saturer la totalité ou une très forte proportion des insaturations vinyliques.

S'agissant du catalyseur d'hydrosilylation, on peut faire appel notamment aux composés suivants: le platine, l'acide hexachloroplantique sous forme hydratée ou non, les métaux carbonyles tels que par exemple le cobalt carbonyle, le nickel carbonyle. Le catalyseur préféré de l'invention est l'acide hexachloroplatinique. La quantité de catalyseur utilisée est choisie de manière que le rapport:

$$\frac{\text{poids de métal élémentaire contenu dans le catalyseur}}{\text{poids total des réactifs (i) + (2i)}}$$

se situe dans l'intervalle allant de $10.10^{-6}$ à $400.10^{-6}$.

Les non solvants ou mélange de non solvants convenables pour précipiter le polymère précurseur de formule (V) sont le méthanol, l'éthanol, l'acétone, un mélange acétone-éthanol ou tout autre solvant ou mélange ne solubilisant pas le polymère précurseur.

Dans l'étape (b), on opère le greffage du groupe mésogène M apporté par la molécule M—OH de formule (VI). La méthode utilisée consiste dans l'alkylation de la fonction hydroxyle par les chaînons latéraux bromés du polymère précurseur de formule (V).

Dans une forme préférée de mise en oeuvre de l'invention, la molécule M—OH utilisée comme réactif (4i) répond à la formule:

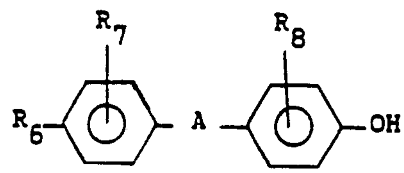

(VII)

dans laquelle les symboles $R_6$, $R_7$, $R_8$ et A possèdent les significations donées ci-avant dans la formule (II).

Dans une forme plus préférentielle encore de mise en oeuvre de l'invention, le réactif (4i) utilisé est choisi dans le groupe suivant de composés:

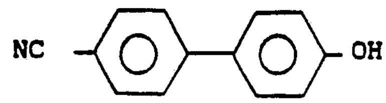

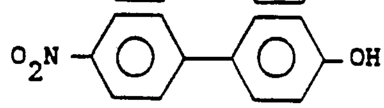

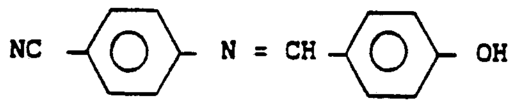

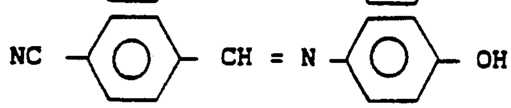

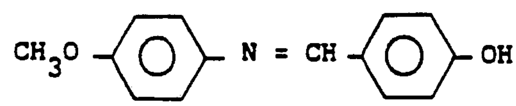

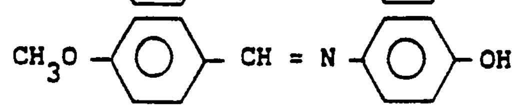

La réaction de greffage de l'étape (b) est conduite en présence d'un solvant ou mélange de solvants communs au polymère de formule (V) et au réactif hydroxylé de formule (VI) et d'un agent basique. Les solvants préférés sont le tétrahydrofuranne, le benzène, le toluène, la butanone-2. S'agissant de l'agent basique, on fait appel notamment à un hydroxyde de métal alcalin comme la soude éventuellement en solution aqueuse ou à un carbonate de métal alcalin comme $K_2CO_3$; la quantité de cet agent utilisée, exprimée en poids par rapport au poids total des réactifs (3i) + (4i), se situe entre 100% et 400%. Cette réaction est conduite à une température se situant dans l'intervalle allant de 60°C à 150°C; généralement cette température correspond, quand cela est possible, à celle du point d'ébullition du milieu solvant utilisé. Généralement le nombre de mols de réactifs hydroxylé (4i) ajouté par mole de polymère de formule (V) est égal au nombre de chaînons latéraux bromés contenus dans une mole dudit polymère augmenté d'un excès de 5 à 15%.

Cette réaction est conduite en présence d'un catalyseur de transfert de phase consistant notamment en un halogénure, un hydroxyde ou un sulfate de tétraalkylammonium. Le catalyseur préféré est le bromure de tétrabutylammonium. La quantité de catalyseur utilisée se situe dans l'intervalle allant 0,5 à 0,3 mole par mole de réactif (4i).

La réaction de l'étape (b) est terminée par filtration et addition dans la phase organique d'un non solvant ou d'un mélange de non solvants tels que ceux indiqués ci-avant à propos de l'étape (a) et par séparation du polymère précipité.

En ce qui concerne les silanes bromés de formule (IV) constituant le réactif (2i) de l'étape (a), ce sont des composés connus dans l'état de la technique. Pour x = 0 et x = 1, les silanes bromés correspondants sont décrits par exemple dans Chemical Abstracts, volume 61, 10549 b (1964) et volume 90, 203 090 k (1979).

Pour des valeurs de x égales ou supérieurs à 2, les silanes bromés correspondant peuvent être préparés en réalisant les étapes suivantes:

(a') . faire réagir en présence d'un catalyseur d'hydrosilyation:

— (5i) un ω-bromalcène de formule:

$$BR—(CH_2)_{x-2}—CH=CH_2 \qquad (VIII)$$

— sur (6i) un diorganochlorosilane de formule:

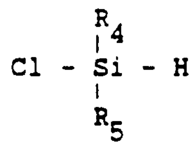 (IX)

dans laquelle les symboles $R_4$ et $R_5$ ont les définitions générales ou préférées indiquées ci-avant à propos de la formule (I),

. puis isoler par distillation sous pression réduite le (bromoalkyl)diorganochlorosilane de formule:

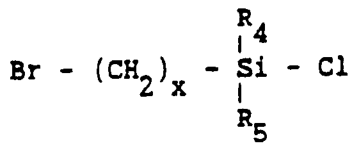 (X)

(b') . réduire ensuite le chlorosilane bromé isolé de formule (X) en présence d'un catalyseur de réduction tel que notamment $LiAlH_4$, LiH ou NaH en (bromoalkyl)diorganosilane de formule (IV).

Le étape (a') est réalisée dans le mêmes conditions que celles mises en oeuvre dans l'étape (a) précitée en travaillant de préférence sous une très légère surpression d'un gaz inerte.

S'agissant de l'étape (b'), elle est conduit à une température comprise entre la température ambiante (23°C) et 50°C en opérant au sein d'un solvant consistent notamment dans un éther oxyde cyclique ou non cyclique comme le tétrahydrofuranne, le dioxane, l'éther diéthylique ou leurs mélanges. La quantité de catalyseur de réduction utilisée, exprimée en nombre d'ions hydrure par mole de chlorosilane bromé de formule (X), se situe généralement entre 1 et 10.

L'invention sera mieux illustrée par les exemples suivants, donnés uniquement à titre indicatif.

Exemple 1

On décrit dans cet exemple un polymère obtenu à partir d'un polybutadiène hydroxytéléchélique comportant 90% d'insaturations de type vinylique pendantes sur lequel sont greffés, par l'intermédiaire du (bromo-5 pentyl)diméthylsilane, des groupements mésogènes dérivés du cyano-4 hydroxy-4' biphényle. La formule de ce polymère est la suivante:

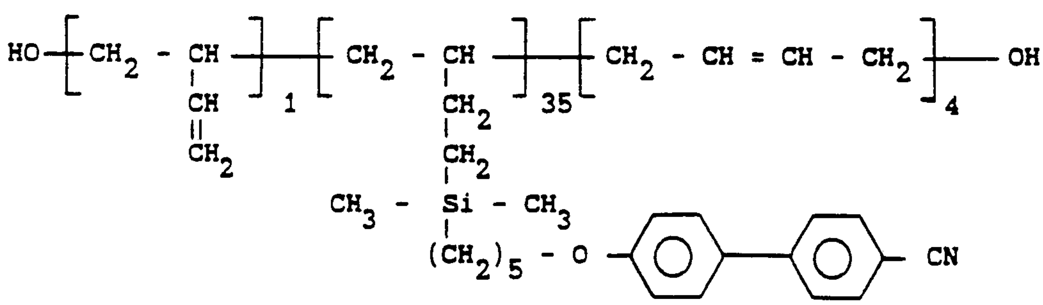

1. Etape (a)

Dans un réacteur équipé d'un réfrigérant ascendant d'une agitation centrale et d'un systemè de chauffage, on charge:

— 0,77 g (0,00035 moles) de polybutadiène hydroxytéléchélique commercialisé par la Société Nippon Soda sous la marque Nisso-PD-G2000 ayant la formule suivante:

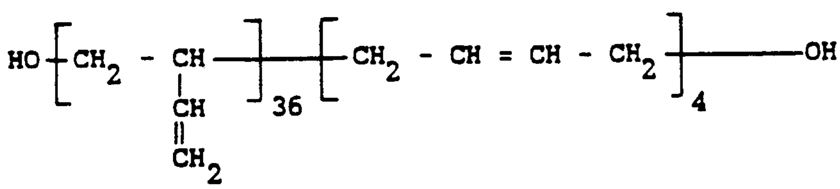

et présentant les caractéristiques physiques suivantes: poids moléculaire: 2194 g et Tg: −18°C.

— 3 g (0,014 moles) de (bromo-5 pentyl)diméthylsilane, et

— 10 $cm_3$ de toluène anhydre.

On agite le mélange pour obtenir une solution homogène, puis on le chauffe sous agitation à une température de 60°C et on ajoute ensuite 0,003 g (0,0011 g de platine élémentaire) d'acide hexachloroplatinique hexahydraté en opérant sous atmosphère inerte (azote).

Le mélange réctionnel est maintenu pendant 20 heures à 60°C, puis il est refroidi à température ambiante. On ajoute ensuite 150 $cm^3$ de méthanol pour précipiter le polymère précurseur résultant. Ce dernier est ensuite séparé par décantation et séché. Sa masse moléculaire est de 9509 g.

Le taux de modification des doubles liasions du polybutadiène de départ est suivi par analyse RMN. On observe que 97% des insaturations vinyliques pendantes ont été modifiées, tandis que les insaturations non vinyliques (diéniques) n'ont pas été saturées.

2. Etape (b)

Dans un réacteur tel que celui utilisé pour réaliser l'étape (a), on charge:

— une solution dans le toluène (100 cm$^3$) de 3 g (0,00031 moles) du polymère précurseur obtenu en fin de l'étape (a) de formule:

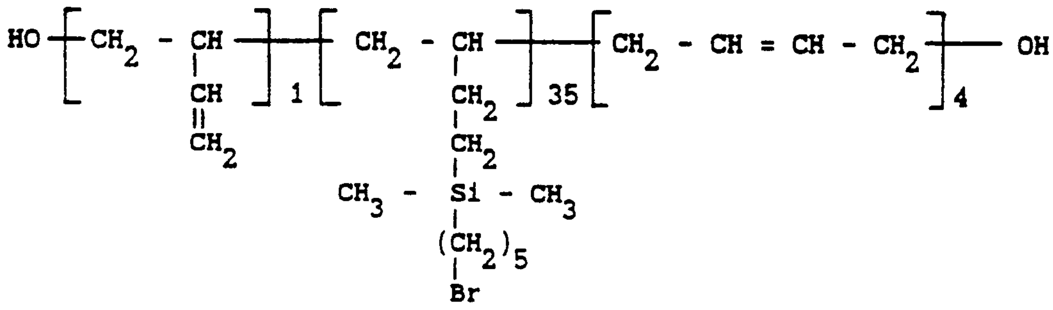

— 2,3 g (0,012 moles) de cyano-4 hydroxy-4' biphényle,

— 10 g de $K_2\,CO_3$, et

0,38 g (0,0012 moles) de bromure de tétrabutylammonium.

Le mélange réactionnel, sous agitation vigoureuse, est porté à une température de 120°C à laquelle on observe le reflux du toluène mis en oeuvre. L'ensemble est maintenu à cette température, sous agitation vigoureuse, pendant 20 heures.

Après la fin de la réaction, on filtre le mélange réactionnel pour séparer la fraction insoluble renfermant le $K_2CO_3$. Las phase organique liquide restante est concentrée par élimination de 70 cm$^3$ de toluène et le polymère cristaux liquides à groupes mésogènes latéraux souhaité est précité par ajout de 300 cm$^3$ de méthanol, puis il est séparé et sécné pendant 24 heures sous une pression réduite de 1,33.10$^2$ Pa. Dans ce polymère, l'apparition des liaisons —$CH_2$—O— et la disparition des liaisons —$CH_2$—Br— on été suivies par analyse RMN.

Le polymère obtenu est gris opaque. Ses propriétés sont étudiées au moyen d'un microscope polarisant et par analyse calorimétrique différentielle. Dans cette dernie analyse on détermine sur un échantilon soumis à des variations de température tant en montée qu'en descente de 10°C/min la température de transition vitreuse (Tg).

Les résulats obtenus sont les suivants:

— Tg: 15°C;

— Plage d'anisotropie en dessus de la Tg (phase smectique): elle va de 15°C à 100°C; au delà de 110°C, on obtient un liquide isotrope.

3. Description de la prépration du (bromo-5 pentyl) diméthylsilane utilisé dans l'étape (a)

3.1 Etape (a')

Dans un réacteur tel que celui utilisé pour réaliser l'étape (a), on charge:

— une solution dans le toluène anhydre (10 cm$^3$) de 10 g (0,067 moles) de bromo-1 pentène-4, et

— 0,005 g (0,0018 g de platine élémentaire) d'acide hexachloroplatinique hexahydraté,

en opérant sous atmosphère inerte (argon).

Le mélange devient homogène en 10 minutes. On additionne ensuite progressivement 6,9 g (0,073 moles) de diméthylchlorosilane en opérant à une température de 40°C et sous une légère surpression d'argon. L'addition terminée, le mélange réactionnel est maintenu à 40°C pendant 4 heures.

Le produit d'hydrosilylation du bromo-1 pentène-4 est ensuite récupéré par évaporation du solvant et il est distillé à une température de 85°C sous une pression réduite de 0,67.10$^2$ Pa.

3.2 Etape (b')

Dans un réacteur équipé comme indiqué ci-avant pour l'étape (a'), on charge une suspension de 5,16 g (0,136 moles) de $LiAlH_4$ dans l'éther diéthylique (100 cm$^3$), puis on ajoute goutte à goutte une solution de 33 g (0,136 moles) du (bromo-5 pentyl)diméthylchlorosilane préparé comme indiqué dans l'étape (a') dans l'éther diéthylique (50 cm$^3$).

L'addition est effectuée à une température ambiante en atmosphère séche, puis le mélange est porté au reflux de l'éther diéthylique et maintenu dans ces conditions pendant 3 heures. Au bout de ce temps, l'excès d'hydrure est détruit par addition de 10 cm$^3$ d'une solution aqueuse saturée de $Na_2SO_4$. Le mélange obtenu est filtré et le solvant évapore. Après distillation à une température de 40°C et sous une pression réduite de 0,67.10$^2$ Pa, on récupère le (bromo-5-pentyl)diméthylsilane souhaité.

Exemple 2

Par la méthode décrite dans l'exemple 1, on synthétise le polymère de formule suivante:

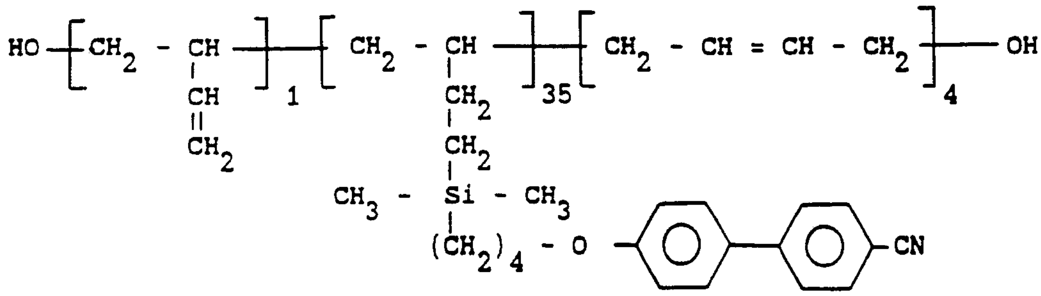

Ce polymère est obtenu exactement comme indiqué dans la méthode décrite, sauf en ce qui concerne les points suivants:

. dans l'étape (a), le (bromo-4 butyl)diméthylsilane remplace le (bromo-5 pentyl)diméthylsilane,

. dans l'étape (a'), le bromo-1 butène-3 remplace le bromo-1 pentène-4 et le (bromo-4 butyl)diméthylchlorosilane est distillé à une temperature de 75°C sous une pression réduite de $0,67.10^2$ Pa;

. dans l'étape (b'), le (bromo-4 butyl)diméthylsilane est distillé à une témperature de 80°C sous une pression réduite de $20.10^2$ Pa.

Ce polymère présente les caractéristiques suivantes:

— Tg: 20°C;

— Plage d'anisotropie en dessus de la Tg (phase smectique): elle va de 20°C à 80°C; au delà de 80°C, on obtient un liquide isotrope.

Exemple 3

Par la méthode décrite dans l'exemple 1, on synthétise le polymère de formule suivante.

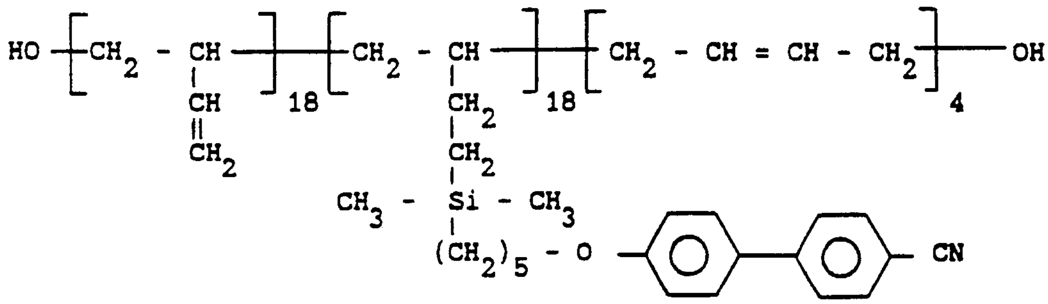

Ce polymère est obtenu exactement comme indiqué dans la méthode décrite, sauf en ce qui concerne l'étape (a) où on met en oeuvre:

— 0,77 g (0,00035 moles) de polybutadiène hydroxytéléchélique, et

— 1,32 g (0,0063 moles) de (bromo-5 pentyl)diméthylsilane.

Ce polymère présente les caractéristique suivantes:

— Tg: −5°C;

— Plage d'anisotropie en dessus de la Tg (phase smectique): elle va de −5°C à 45°C; au delà de 45°C, on obtient un liquide isotrope.

**Revendications pour les Etats contractants: AT BE CH LI DE FR GB IT LU NL SE**

1. Polymères cristaux liquides portant des groupes mésogènes latéraux, caractérisés en ce qu'ils répondent essentiellement à la formule générale:

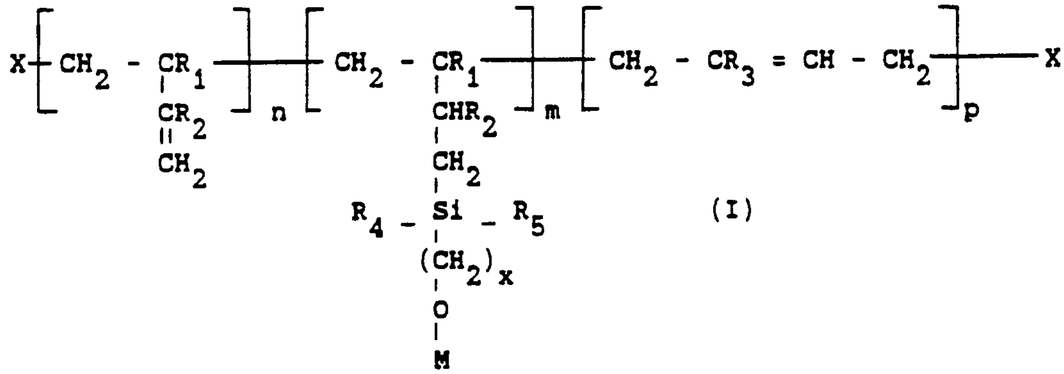

(I)

dans laquelle:

les symboles X, identiques ou différents, représentent chacun un atome d'hydrogène ou un groupe fonctionnel terminal hydroxyle, carboxyle ou amino;

— $R_1$, $R_2$ et $R_3$, identiques ou différents, représentent chacun un atome d'hydrogène, un atome de chlore ou un radical méthyle;

— $R_4$ et $R_5$, identiques ou différents, représentent chacun un radical hydrocarboné monovalent choisi parmi: les radicaux alkyles, linéaires ou ramifiés, ayant de 1 à 6 atomes de carbone; un radical phényle éventuellement substitué par un ou plusieurs radicaux alkyles et/ou alkoxy ayant de 1 à 4 atomes de carbone;

— les symboles M, identiques ou différents, représentent chacun un groupe mésogène dit ou un groupe susceptible de générer la propriété mésogène après greffage;

— les symboles n, m et p, identiques ou différents, représentent les nombres moyens des différentes unités de récurrence disposées statistiquement, ces nombres étant liés entre eux par les relations suivantes:

* la somme n + m + p se situe dans l'intervalle allant de 10 à 20000,
* le rapport $r_1 = p/(n + m + p)$ se situe dans l'intervalle allant de 0 à 0,9, et
* le rapport $r_2 = m/(n + m)$ se situe dans l'intervalle allant de 0,1 à 1;

— le symbole x est un nombre entier situé dans l'intervalle allant de 0 à 8.

2. Polymères selon la revendication 1, caractérisés en ce qu'ils répondent à la formule (I) dans laquelle:

— les symboles X, identiques ou différents, représentent chacun un groupe fonctionnel terminal hydroxyle ou carboxyle;

— $R_1$, $R_2$ et $R_3$, identiques ou différents, représentent chacun un atome d'hydrogène ou un radical méthyle;

— $R_4$ et $R_5$, identiques ou différents, représentent chacun: un radical alkyle linéaire ayant de 1 à 3 atomes de carbone, comme un radical méthyle, éthyle ou n-propyle; un radical phényle;

— les symobles M, identiques ou différents, représentent chacun un radical de formule:

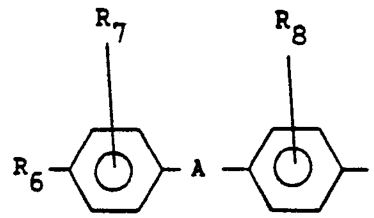

(II)

dans laquelle:

* A représente un lien valentiel simple ou un reste

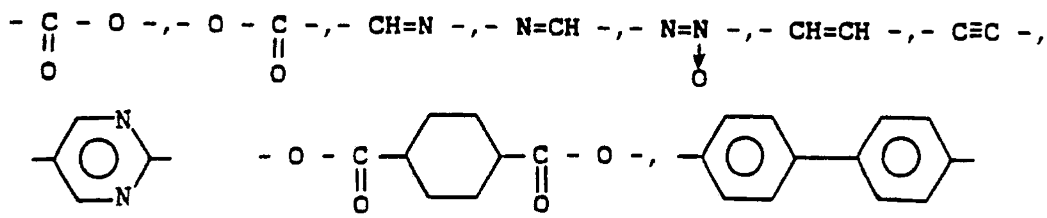

* $R_6$ représente le radical B, le radical

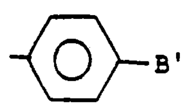

ou le radical

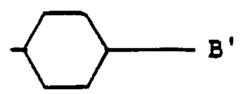

dans lequel B et B' sont chacun: un atome d'hydrogène, un reste $—O—(CH_2)_yH$, un reste $—COO(CH_2)_yH$, un reste $—COO(CH_2)_yH$ un reste $—CO—(CH_2)_yH$, avec y étant un nombre entier situé dans l'intervalle allant de 1 à 8, —CN ou $—NO_2$;

* $R_7$ et $R_8$, identiques ou différents, représentent chacun un atome d'hydrogène ou un radical alkyle, linéaire ou ramifié, ayant de 1 à 4 atomes de carbone;

— les symboles n, m et p représente des nombres moyens qui sont liés entre eux par les relations suivantes:

* la somme n + m + p se situe dans l'intervalle allant de 10 à 1000,
* le rapport $r_1$ se situe dans l'intervalle allant de 0 à 0,5,
* le rapport $r_2$ se situe dans l'intervalle allant de 0,2 à 1,

— le symbole x est un nombre entier situé dans l'intervalle allant de 2 à 6.

3. Polymères selon la revendication 2, caractérisés en ce que ce sont des composés dans lesquels $R_1$, $R_2$ et $R_3$ représentent un atome d'hydrogène et les symboles M, identiques ou différents, représentent chacun un groupe mésogène proprement dit répondant à la formule (II) de structure:

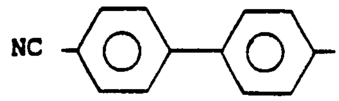

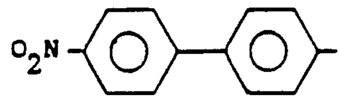

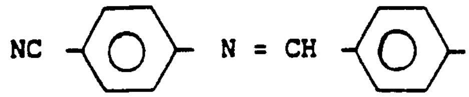

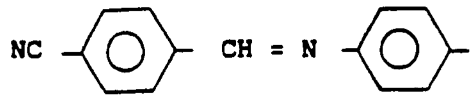

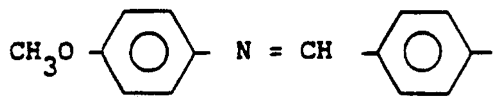

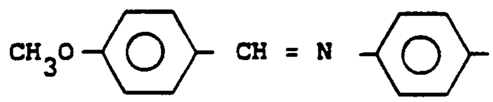

4. Procédé pour l'obtention des polymères cristaux liquides selon l'une quelconque des revendications 1 à 3, caractérisé en ce qu'il comprend les étapes suivantes:

(a) . faire régair en présence d'un catalyseur d'hydrosilyation:

— (i) un polymère de formule:

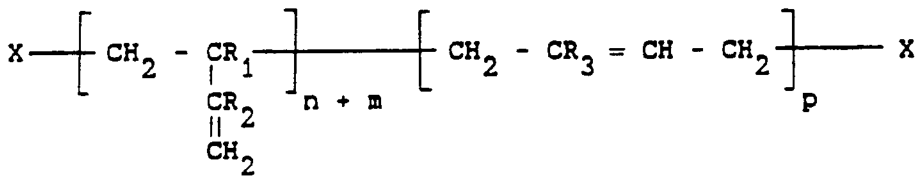 (III)

dans laquelle les symboles X, $R_1$, $R_2$ et $R_3$, la somme n + m + p et le rapport $r_1 = p/(n + m + p)$ ont les significations générales ou préférées indiquées ci-avant dans l'une des revendications 1 à 3 à propos de la formule (I)

— sur (2i) un (bromoalkyl)diorgansilane de formule:

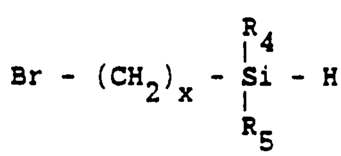 (IV)

dans laquelle les symboles $R_4$, $R_5$ et x ont les significations générales ou préférées indiquées dans l'une des revendications 1 à 3 ci-avant à propos de la formule (I),

— pour obtenir un polymère précurseur de formule:

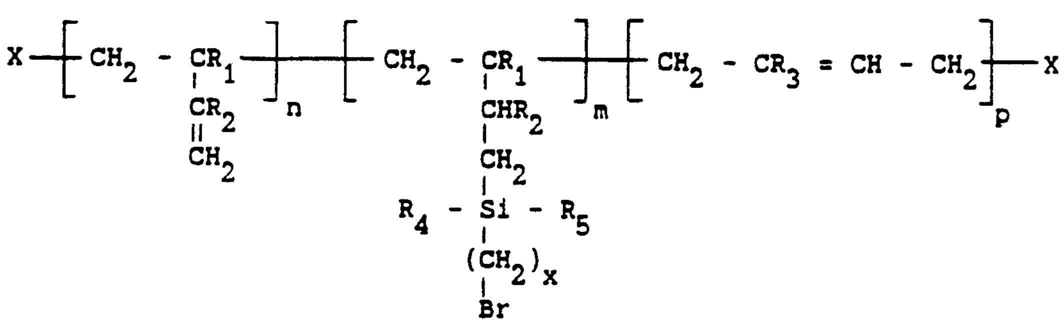 (V)

dans laquelle les symboles X, $R_1$, $R_2$, $R_3$, $R_4$, $R_5$ et x, la somme n + m + p les rapports $r_1 = p/(n + m + p)$ et $r_2 = m/(n + m)$ ont les significations générales ou préférées indiquées ci-avant dans l'une des revendications 1 à 3 à propos de la formule (I),

. puis faire précipiter ledit polymère précurseur par addition dans le milieu réactionnel d'un non solvant ou mélange de non solvants et séparer le polymère précipité du milieu réactionnel;

(b) . faire réagir ensuite en présence d'un catalyseur de transfert de phase:

— (3i) le polymère précurseur de formule (V)

— sur (4i) un réactif hydroxylé de formule:

$$M—OH \qquad (VI)$$

dans laquelle le symbole M possède les significations générales ou particulières données ci-avant dans l'une des revendications 1 à 3 à propos des formules (I) et (II),

— pour obtenir le polymère souhaité de formule (I),

. puis séparer de manière connue en soi ledit polymère résultant de formule (I) du milieu réactionnel.

5. Procédé selon la revendication 4, caractérisé en ce que l'étape (a) est conduite en milieu homogène par addition aux réactifs de départ d'un solvant ou mélange de solvants communs au polymère de formule (III) et au silane bromé de formule (IV).

6. Procédé selon la revendication 5, caractérisé en ce que les solvants utilisés sont le tétrahydrofuranne, le benzène, le toluène, l'hexane, le tétrachlorure de carbone.

7. Procédé selon l'une quelconque des revendications 4 à 6, caractérisé en ce que l'étape (a) est conduite à une température allant de la température ambiante (23°C) à 70°C.

8. Procédé selon l'une quelconque des revendications 4 à 7, caractérisé en ce que l'étape (a) le nombre de moles de silane bromé de formule (IV) ajouté par mole de polymères de formule (III) est égal au nombre d'insaturations de type vinylique pendantes contenues dans une mole de polymère sur lesquelles on désire additionner ledit silane bromé augmenté éventuellement d'un excès de 5 à 15% dans le cas où l'on souhaite saturer la totalité ou une très forte proportion des insaturations vinyliques.

9. Procédé selon l'une quelconque des revendications 4 à 8, caractérisé en ce que l'étape (b) est conduite en présence d'un solvant ou mélange de solvants communs au polymère de formule (V) et au réactif hydroxylé de formule (VI) et d'un basique.

10. Procédé selon l'une quelconque des revendications 4 à 9, caractérisé en ce que l'étape (b) est conduite à une température se situant dans l'intervalle allant de 60 à 150°C.

11. Procédé selon l'une quelconque des revendications 4 à 10, caractérisé en ce que l'étape (b) le nombre de moles de réctif hydroxylé (4i) ajouté par mole de polymère de formule (V) est égal au nombre de chaînons latéraux bromés contenus dans une mole dudit polymère augmenté d'un excès de 5 à 15%.

12. Articles conformés tels que objets moulés, fils et films issus des polymères selon l'une quelconque des revendications 1 à 3, ces derniers étant éventuellement polymérisés ou réticulés au moyen des insaturations éthyléniques non saturées existantes ainsi que des groupes fonctionnels terminaux éventuels.

**Revendications pour l'Etat contractant: ES**

1. Procédé de préparation de polymères cristaux liquides portant des groupes mésogènes latéraux qui répondent essentiellement à la formule générale:

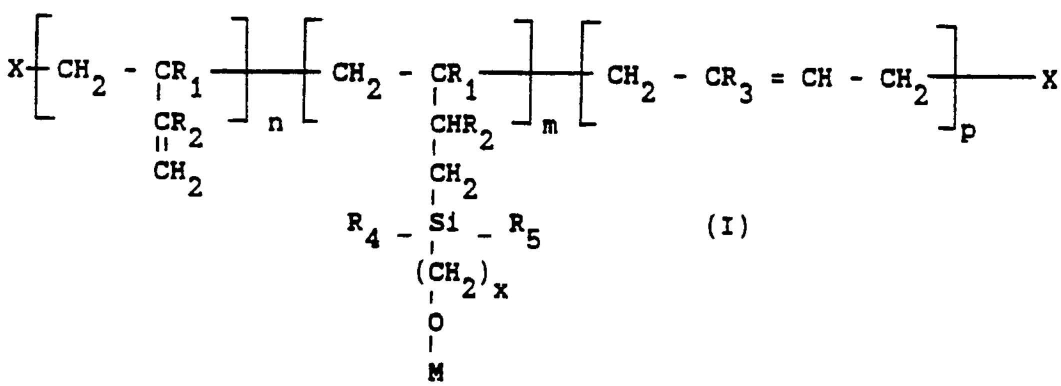

(I)

dans laquelle:

les symboles X, identiques ou différents, représentent chacun un atome d'hydrogène ou un groupe fonctionnel terminal hydroxyle, carboxyle ou amino;

— $R_1$, $R_2$ et $R_3$, identiques ou différents, représentent chacun un atome d'hydrogène, un atome de chlore ou un radical méthyle;

— $R_4$ et $R_5$, identiques ou différents, représentent chacun un radical hydrocarboné monovalent choisi parmi: les radicaux alkyles, linéaires ou ramifiés, ayant de 1 à 6 atomes de carbone; un radical phényle

éventuellement substitué par un ou plusieurs radicaux alkyles et/ou alkoxy ayant de 1 à 4 atomes de carbone;

— les symboles M, identiques ou différents, représent chacun un groupe mésogène proprement dit ou un groupe susceptible de générer la propriété mésogène après greffage;

— les symboles n, m et p, identiques ou différents, représentent les nombres moyens des différentes unités de récurrence disposées statistiquement, ces nombres étant liés entre eux par les relations suivantes:

* la somme $n + m + p$ se situe dans l'intervalle allant de 10 à 20000,
* le rapport $r_1 = p/(n + m + p)$ se situe dans l'intervalle allant de 0 à 0,9, et
* le rapport $r_2 = m/(n + m)$ se situe dans l'intervalle allant de 0,1 à 1;

— le symbole x est un nombre entier situé dans l'intervalle allant de 0 à 8;

ce procédé étant caractérisé en ce qu'il comprend les étapes suivantes:

(a) . faire réagir en présence d'un catalyseur d'hydrosilylation:

— (i) un polymère de formule:

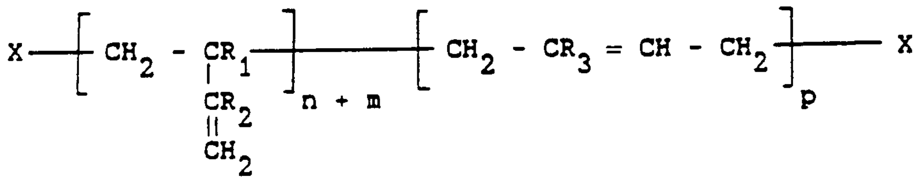

(III)

dans laquelle les symboles X, $R_1$, $R_2$ et $R_3$, la somme $n + m + p$ et le rapport $r_1 = p/(n + m + p)$ ont les significations générales indiquées ci-avant à propos de la formule (I)

— sur (2i) un (bromoalkyl)diorgansilane de formule:

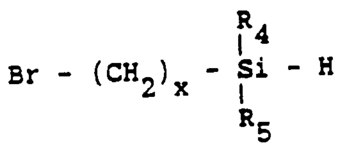

(IV)

dans laquelle les symboles $R_4$, $R_5$ et x ont les significations générales ou préférées indiquées ci-avant à propos de la formule (I),

— pour obtenir un polymère précurseur de formule:

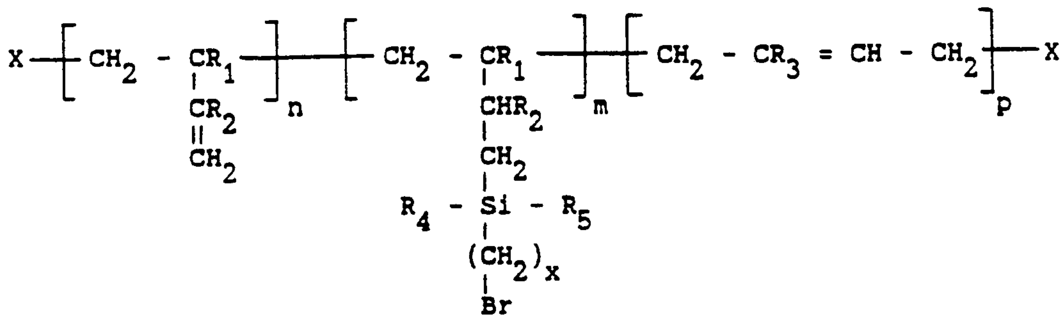

(V)

dans laquelle les symboles X, $R_1$, $R_2$, $R_3$, $R_4$, $R_5$ et x, la somme $n + m + p$, les rapports $r_1 = p/(n + m + p)$ et $r_2 = m/(n + m)$ ont les significations générales indiquées ci-avant à propos de la formule (I),

. puis faire précipiter ledit polymère précurseur par addition dans le milieu réactionnel d'un non solvant ou mélange de non solvants et séparer le polymère précipité du milieu réactionnel;

(b) . faire réagir ensuite en présence d'un catalyseur de transfert de phase:

— (3i) le polymère précurseur de formule (V)

— sur (4i) un réactif hydroxylé de formule:

$$M—OH \qquad (VI)$$

dans laquelle le symbole M possède les significations générales données ci-avant à propos des formules (I) et (II),

— pour obtenir le polymère souhaité de formule (I),

. puis séparer de mainère connue en soi ledit polymère résultant de formule (I) du milieu réactionnel.

2. Procédé selon la revendication 1, caractérisé en ce que les symboles X, $R_1$, $R_2$, $R_3$, $R_4$, $R_5$, M, n, m, p et x ont les significations préférées suivantes:

— les symboles X, identiques ou différents, représentent chacun un groupe fonctionnel terminal hydroxyle ou carboxyle;

— $R_1$, $R_2$ et $R_3$, identiques ou différents, représentent chacun un atome d'hydrogène ou un radical méthyle;

— $R_4$ et $R_5$, identiques ou différents, représentent chacun: un radical alkyle linéaire ayant de 1 à 3 atomes de carbone, comme un radical méthyle, éthyle ou n-propyle; un radical phényle;

— les symobles M, identiques ou différents, représentent chacun un radical de formule:

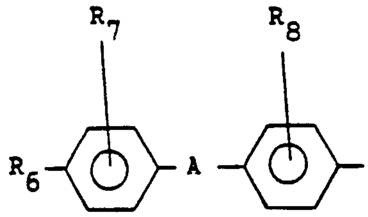

(II)

dans laquelle:

* A représente un lien valentiel simple ou un reste

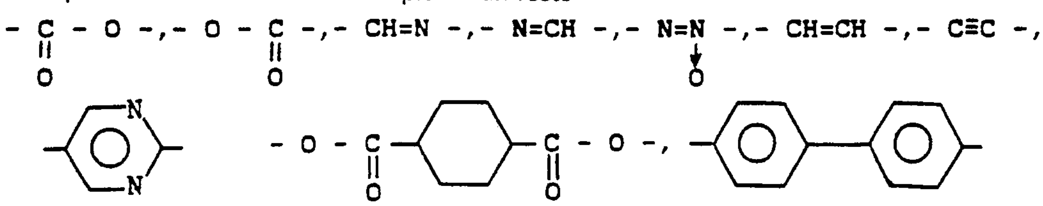

* $R_6$ représente le radical B, le radical

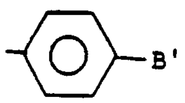

ou le radical

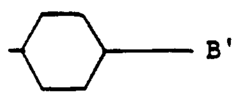

dans lequel B et B' sont chacun: un atome d'hydrogène, un reste $—O—(CH_2)_yH$, un reste $—COO(CH_2)_yH$, un reste $—CO—(CH_2)_yH$ avec y étant un nombre entier situé dans l'intervalle allant de 1 à 8, —CN ou $—NO_2$;

* $R_7$ et $R_8$, identiques ou différents, représentent chacun un atome d'hydrogène ou un radical alkyle, linéaire ou ramifié, ayant de 1 à 4 atomes de carbone;

— les symboles n, m et p représente des nombres moyens qui sont liés entre eux par les relations suivantes:

* la somme n + m + p se situe dans l'intervalle allant de 10 à 1000,
* le rapport $r_1$ se situe dans l'intervalle allant de 0 à 0,5,
* le rapport $r_2$ se situe dans l'intervalle allant de 0,2 à 1,

— le symbole x est un nombre entier situé dans l'intervalle allant de 2 à 6.

3. Procédé selon la revendication 2, caractérisé en ce que les symboles $R_1$, $R_2$ et $R_3$ représentent un atome d'hydrogène et les symboles M, identiques ou différents, représentent chacun un groupe mésogène proprement dit répondant à la formule (II) de structure:

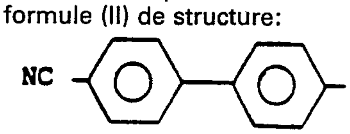

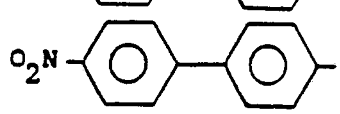

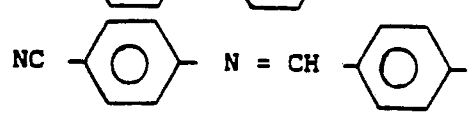

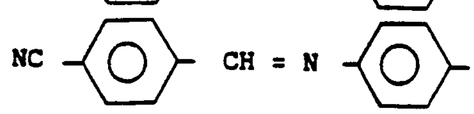

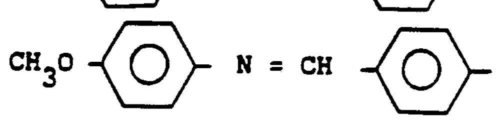

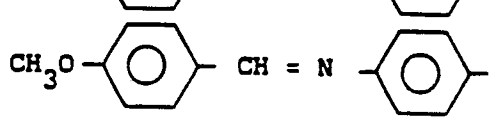

4. Procédé selon l'un quelconque des revendications 1 à 3, caractérisé en ce que l'étape (a) est conduite en milieu homogène par addition aux réactifs de départ d'un solvant ou mélange de solvants communs au polymère de formule (III) et au silane bromé de formule (IV).

5. Procédé selon la revendication 4, caractérisé en ce que les solvants utilisés sont le tétrahydrofuranne, le benzène, le toluène, l'hexane, le tétrachlorure de carbone.

6. Procédé selon l'une quelconque des revendications 1 à 5, caractérisé en ce que l'étape (a) est conduite à une température allant de la température ambiante (23°C) à 70°C.

7. Procédé selon l'une quelconque des revendications 1 à 6, caractérisé e n ce que dans l'étape (a) le nombre de moles de silane bromé de formule (IV) ajouté par mole de polymères de formule (III) est égal au nombre d'insaturations de type vinylique pendantes contenues dans une mole de polymère sur lesquelles on désire additionner ledit silane bromé augmenté éventuellement d'un excès de 5 à 15% dans le cas où l'on souhaite saturer la totalité ou une très forte proportion des insaturations vinyliques.

8. Procédé selon l'une quelconque des revendications 1 à 7, caractérisé en ce que l'étape (b) est conduite en présence d'un solvant ou mélange de solvants communs au polymère de formule (V) et au réactif hydroxylé de formule (VI) et d'un agent basique.

9. Procédé selon l'une quelconque des revendications 1 à 8, caractérisé en ce que l'étape (b) est conduite à une température se situant dans l'intervalle allant de 60 à 150°C.

10. Procédé selon l'une quelconque des revendications 1 à 9, caractérisé en ce que l'étape (b) le nombre de moles de réactif hydroxylé (4i) ajouté par mole de polymère de formule (V) est égal au nombre de chaînons latéraux bromés contenus dans une mole dudit polymère augmenté d'un excès de 5 à 15%.

11. Articles conformés tels que objets moulés, fils et films issus des polymères selon le procédé conforme à l'une quelconque des revendications 1 à 10, ces polmyères étant éventuellement polymérisés ou réticulés au moyen des insaturations éthyléniques non saturées existantes ainsi que des groupes fonctionnels terminaux éventuels.

**Patentansprüche für die Vertragsstaaten: AT BE CH DE FR GB IT LI LU NL SE**

1. Flüssigkristallpolymere mit seitlichen mesogenen Gruppen, dadurch gekennzeichnet, daß sie im wesentlichen der allgemeinen Formel

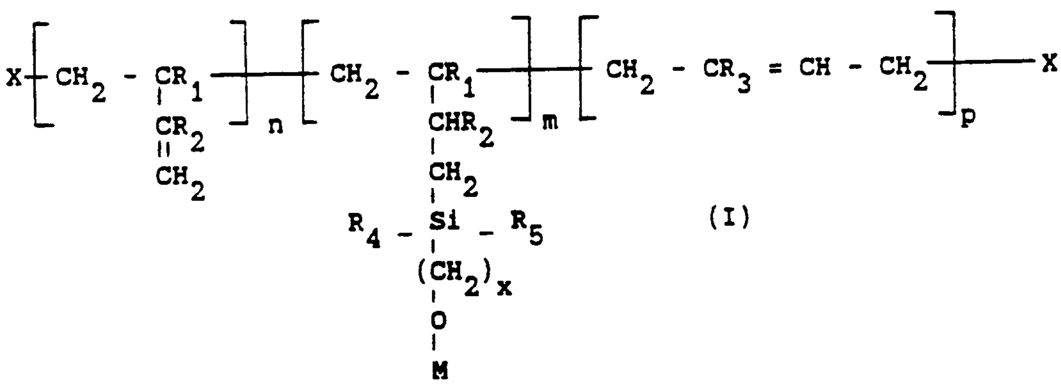

(I)

entsprechen, worin

— die Symbole X, die identisch oder verschieden sind, jeweils ein Wasserstoffatom oder eine endständige funktionelle Hydroxyl-, Carboxyl-, oder Aminogruppe bedeuten;

— $R_1$, $R_2$ und $R_3$, die identisch oder verschieden sind, bedeuten jeweils ein Wasserstoffatom, ein Chloratom oder einen Methylrest;

— $R_4$ und $R_5$, die identisch oder verschieden sind, bedeuten jeweils einen einwertigen Kohlenwasserstoffrest, ausgwählt unter: den linearen oder verzweigten Alkylresten mit 1 bis 6 Kohlenstoffatomen; einem Phenylrest, der gegebenenfalls substituiert ist durch einen oder mehrere Alkyl- und/oder Alkoxyreste mit 1 bis 4 Kohlenstoffatomen;

— die Symbole M, die identisch oder verschieden sind, bedeuten jeweils eine sogenannte mesogene Gruppe oder eine Gruppe, die mesogene Eigenschaften nach dem Pfropfen zu schaffen vermag;

— die Symbole n, m und p, die identisch oder verschieden sind, bedeuten die mittleren Zahlen der verschiedenen wiederkehrenden Einheiten, statistisch verteilt, wobei diese Zahlen untereinander durch die folgenden Beziehungen verbunden sind:

* die Summe $n + m + p$ liegt in dem Bereich von 10 bis 20000,
* das Verhältnis $r_1 = p/(n + m + p)$ liegt in dem Bereich von 0 bis 0,9, und
* das Verhältnis $r_2 = m/(n + m)$ liegt in dem Bereich von 0,1 bis 1;

— das Symbol x ist eine ganze Zahl in dem Bereich von 0 bis 8.

2. Polymere gemäß Anspruch 1, dadurch gekennzeichnet, daß sie der Formel (I) entsprechen, worin:

— die Symbole X, die identisch oder verschieden sind, jeweils eine endständige funktionelle Hydroxyl- oder Carboxylgruppe bedeuten;

— $R_1$, $R_2$ und $R_3$, die identisch oder verschieden sind, bedeuten jeweils ein Wasserstoffatom oder einen Methylrest;

— $R_4$ und $R_5$, die identisch oder verschieden sind, bedeuten jeweils einen linearen Alkylrest mit 1 bis 3 Kohlenstoffatomen wie einen Methyl-, Ethyl- oder n-Propylrest; einen Phenylrest;

— die Symbole M, die identisch oder verschieden sind, bedeuten jeweils einen Rest der Formel:

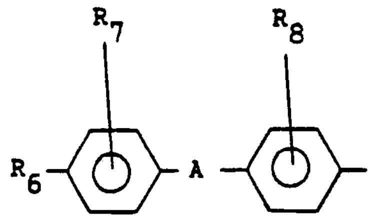

(II)

worin:

* A eine einfache Valenzbindung oder einen Rest bedeutet;

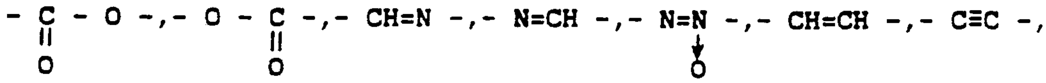

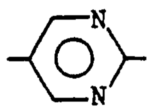

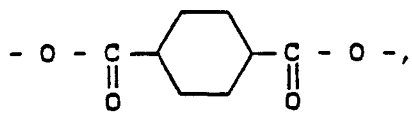

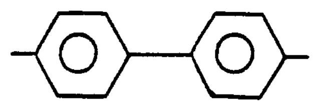

* $R_6$ bedeutet den Rest B, den Rest

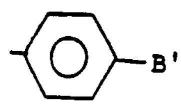

oder den Rest

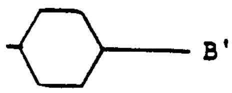

worin B und B' jeweils sind: ein Wasserstoffatom, ein Rest —O—$(CH_2)_yH$, ein Rest —$COO(CH_2)_yH$, ein Rest —CO—$(CH_2)_yH$ mit Y ist gleich eine ganze Zahl in dem Bereich von 1 bis 8, —CN oder —$NO_2$;

* $R_7$ und $R_8$, die identisch oder verschieden sind, bedeuten jeweils ein Wasserstoffatom oder einen linearen oder verzweigten Alkylrest mit 1 bis 4 Kohlenstoffatomen;

— die Symbole n, m und p bedeuten mittlere Zahlen, die untereinander durch die folgenden Beziehugen verbunden sind:

* die Summe n + n + p liegt in dem Bereich von 10 bis 1000;
* das Verhältnis $r_1$ liegt in dem Bereich von 0 bis 0,5;
* das Verhältnis $r_2$ liegt in dem Bereich von 0,2 bis 1;

— das Symbol x ist eine ganze Zahl in dem Bereich von 2 bis 6.

3. Polmyere gemäß Anspruch 1, dadurch gekennzeichnet, daß sie Verbindungen sind, worin $R_1$, $R_2$ und $R_3$ ein Waserstoffatom bedeutet, und die Symbole M, die identisch oder verschieden sind, bedeuten jeweils eine sogenannte mesogene Gruppe der Formel (II) der Struktur

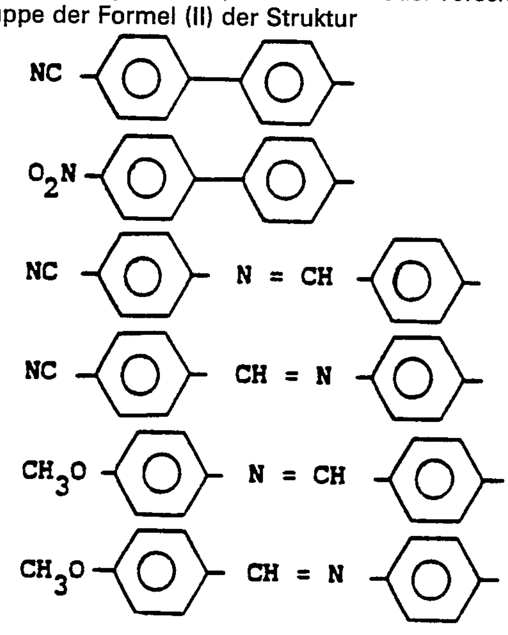

4. Verfahren zur Herstellung der Flüssigkristallpolymere gemäß einem der Ansprüche 1 bis 3, dadurch gekennzeichnet, daß es folgende Stufen umfaßt:

(a) Reaktion in Gegenwart eines Hydrosilylierungskatalysators:

— (i) eines Polymeren der Formel

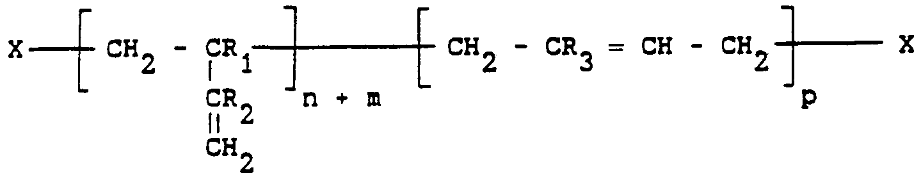 (III)

worin die Symbole X, $R_1$, $R_2$ und $R_3$, die Summe n + m + p

und das Verhältnis $r_1 = p/(n + m + p)$, die vorstehend in einem der Ansprüche 1 bis 3 zur Formel (I) angegebenen allgemeinen oder bevorzugten Bedeutungen besitzen,

— mit (2i) einem (Bromalkyl)-diorganosilan der Formel

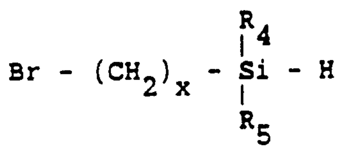 (IV)

worin die Symbole $R_4$, $R_5$ und x die bei Formel (I) in den vorstehenden Ansprüchen 1 bis 3 angegebenen allgemeinen oder bevorzugten Bedeutungen besitzen,

— um ein Precursor-Polymeres der Formel

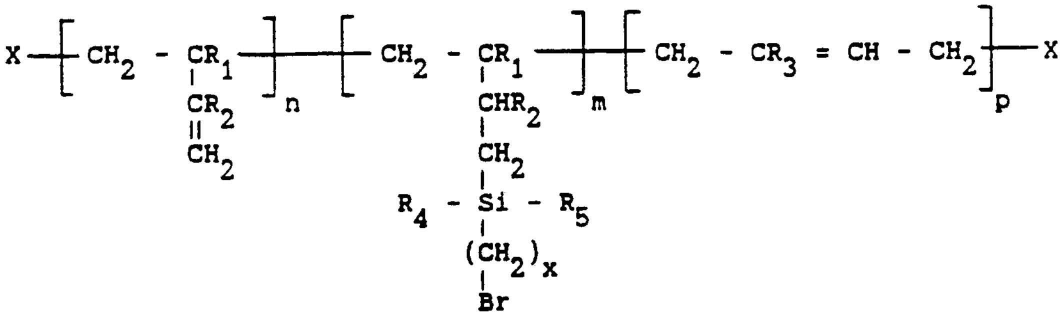 (V)

zu erhalten, worin die Symbole X, $R_1$, $R_2$, $R_3$, $R_4$, $R_5$ und x, die Summe n + m + p, die Verhältnisse $r_1 = p/(n + m + p)$ und $r_2 = m/(n + m)$

die vorstehend in einem der Ansprüche 1 bis 3 zur Formel (I) angegebenen allgemeinen oder bevorzugten Bedeutungen besitzen,

. dann wird dieses Precursor-Polymere durch Zagabe eines Nicht-Lösungsmittels oder eines Nicht-Lösungsmittel-Gemisches in das Reaktionsmilieu gefällt, und das aus dem Reaktionsgemisch ausgefällte Polymere abgetrennt;

(b) dann wird in Gegenwart eines Phasenübergangskatalysators zur Reaktion gebracht:

— (3i) das Precursor-Polymere der Formel (V)

— mit (4i) einem hydroxylierten Reaktanten der Formel

$$M—OH \qquad (VI)$$

worin das Symbol M die vorstehend in einem der Ansprüche 1 bis 3 anläßlich der Formeln (I) und (II) angebenen allgemeinen oder bevorzugten Bedeutungen besitzt,

— um das gewünschte Polymere der Formel (I) zu erhalten,

. dann wird das entstandene Polymere der Formel (I) aus dem Reaktionsmilieu in bekannter Weise abgetrennt.

5. Verfahren gemäß Anspruch 4, dadurch gekennzeichnet, daß die Stufe (a) in homogenem Milieu durchgeführt wird, durch Zugabe eines Lösungsmittels oder Lösungsmittelgemisches zu den Ausgangsreaktion, die dem Polymeren der Formel (III) und dem bromierten Silan der Formel (IV) gemeinsam sind.

6. Verfahren gemäß Anspruch 5, dadurch gekennzeichnet, daß die verwendeten Lösungsmittel tetrahydrofuran, Benzol, Toluol, Hexan, Tetrachlorkohlenstoff sind.

7. Verfahren gemäß einem der Ansprüche 4 bis 6, dadurch gekennzeichnet, daß die Stufe (a) bei einer Temperatur von Umgebungstemperatur (23°C) bis 70°C durchgeführt wird.

8. Verfahren gemäß einem der Ansprüche 4 bis 7, dadurch gekennzeichnet, daß die in der Stufe (a) die Anzhal der Mole bromiertes Silan der Formel (IV), des pro Mol Polymere der Formel (III) zugegeben wird, gleich der Anzahl der anhängenden Unsättigungen vom Vinyltyp, die in einem Mol Polymer enthalten sind,

auf die man das bromierte Silan zusetzen will, gegebenenfalls erhöht um einen Überschuß von 5 bis 15% im Falle, daß man die Gesamtheit oder einen sehr großen Anteil der Vinylunsättigungen sättigen möchte.

9. Verfahren gemäß einem der Ansprüche 4 bis 8, dadurch gekennzeichnet, daß die Stufe (b) in Gegenwart eines Lösungsmittels oder Lösungsmittelgemisches durchgeführt wird, das dem Polymeren der Formel (V) und dem hydroxylierten Reaktanten der Formel (VI) und einem basischen Mittel gemeinsam sind.

10. Verfahren gemäß einem der Ansprüche 4 bis 9, dadurch gekennzeichnet, daß die in der Stufe (b) bein einer Temperatur in dem Bereich von 60 bis 150°C durchgeführt wird.

11. Verfahren gemäß einem der Ansprüche 4 bis 10, dadurch gekennzeichnet, daß die in der Stufe (b) die Zahl der Mole des hydroxylierten Reaktionsteilnehmers (4i), die pro Mol Polymeres der Formel (V) zugesetzt wird, gleich der Zahl der bromierten Seitenkettenglieder ist, die in einem Mol des genannten Polymeren, erhöht umd einen Überschuß von 5 bis 15%, enthalten sind.

12. Geformte Erzeugnisse wie Formstücke, Fäden und Filme aus den Polymeren gemäß einem der Ansprüche 1 bis 3, wobei die letzteren gegebenenfalls mittels vorhandener nicht-gesättigter ethylenischer Unsättigungen sowie gegebenenfalls vorhandener endständiger funktioneller Gruppen polymerisiert oder vernetzt wurden.

**Patentansprüche für den Vertragsstaat: ES**

1. Verfahren zur Herstellung von Flüssigkristallpolymeren mit seitlichen mesogenen Gruppen, im wesentlichen der allgemeinen Formel (I)

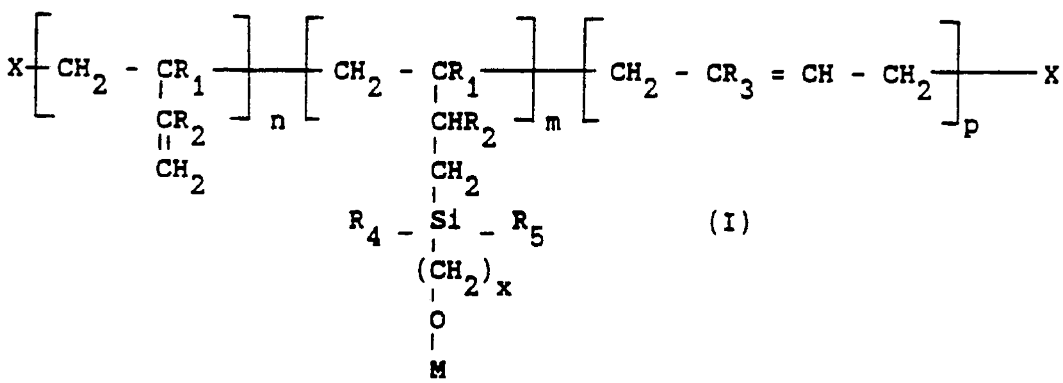

(I)

entsprechen, worin

— die Symbole X, die identisch oder verschieden sind, jeweils ein Wasserstoffatom oder eine endständige funktionelle Hydroxyl-, Carboxyl-, oder Aminogruppe bedeuten;

— $R_1$, $R_2$ und $R_3$, die identisch oder verschieden sind, bedeuten jeweils ein Wasserstoffatom, ein Chloratom oder einen Methylrest;

— $R_4$ und $R_5$, die identisch oder verschieden sind, bedeuten jeweils einen einwertigen Kohlenwasserstoffrest, ausgewählt unter: den linearen oder verzweigten Alkylresten mit 1 bis 6 Kohlenstoffatomen; einem Phenylrest, der gegebenenfalls substituiert ist durch einen oder mehrere Alkyl- und/oder Alkoxyreste mit 1 bis 4 Kohlenstoffatomen;

— die Symbole M, die identisch oder verschieden sind, bedeuten jeweils eine sogenannte mesogene Gruppe oder eine Gruppe, die mesogene Eigenschaften nach dem Pfropfen zu schaffen vermag;

— die Symbole n, m und p, die identisch oder verschieden sind, bedeuten die mittleren Zahlen der verschiedenen wiederkerhenden Einheiten, statistisch verteilt, wobei diese Zahlen untereinander durch die folgenden Beziehungen verbunden sind:

* die Summe $n + m + p$ liegt in dem Bereich von 10 bis 20000,
* das Verhältnis $r_1 = p/(n + m + p)$ liegt in dem Bereich von 0 bis 0,9, und
* das Verhältnis $r_2 = m/(n + m)$ liegt in dem Bereich von 0,1 bis 1;

— das Symbol x ist eine ganze Zahl in dem Bereich von 0 bis 8,

wobei dieses Verfahren dadurch gekennzeichnet ist, daß es die folgenden Stufen umfaßt:

(a) Reaktion in Gegenwart eines Hydrosilylierungskatalysators:

— (i) eines Polymeren der Formel

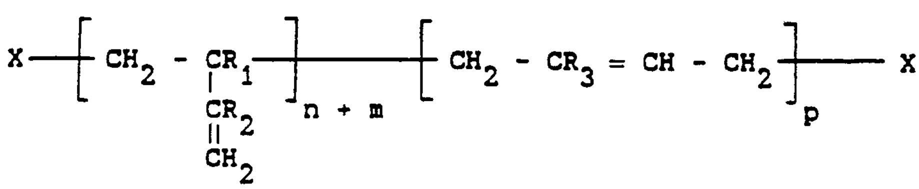

(III)

worin die Symbole X, $R_1$, $R_2$ und $R_3$, die Summe $n + m + p$

und das Verhältnis $r_1 = p/(n + m + p)$, die vorstehend zur Formel (I) angegebenen allgemeinen Bedeutungen besitzen,

— mit (2i) einem (Bromalkyl)-diorganosilan der Formel

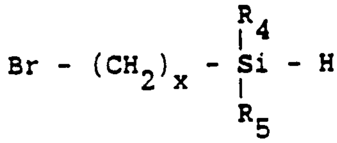

(IV)

worin die Symbole $R_4$, $R_5$ und x die vorstehend für Formel I angegebenen haben, allgemeinen Bedeutungen,

— um ein Precursor-Polymeres der Formel

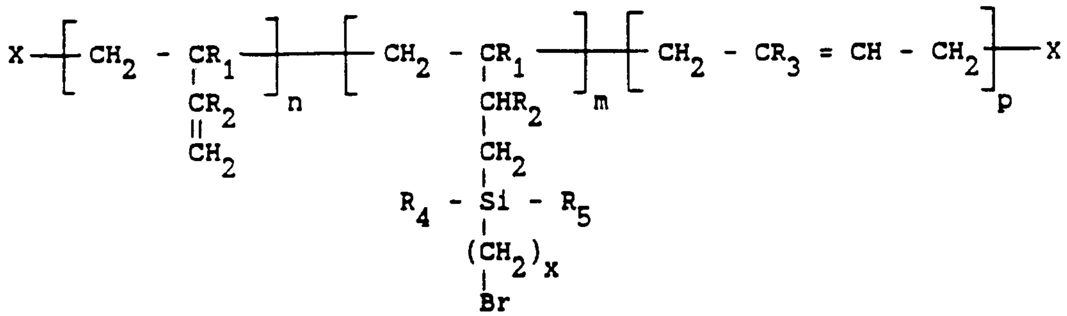

(V)

zu erhalten, worin die Symbole X, $R_1$, $R_2$, $R_3$, $R_4$, $R_5$ und x, die Summe n + m + p, die Verhältnisse $r_1 = p/(n + m + p)$ und $r_2 = m/(n + m)$

die vorstehend zur Formel (I) angegebenen allgemeinen Bedeutungen besitzen,

. dann wird dieses Precursor-Polymere durch Zagabe eines Nicht-Lösungsmittels oder eines Nicht-Lösungsmittel-Gemisches in das Reaktionsmilieu gefällt, und das aus dem Reaktionsgemisch ausgefällte Polymere abgetrennt;

(b) dann wird in Gegenwart eines Phasenübergangskatalysators zur Reaktion gebracht:

— (3i) das Precursor-Polymere der Formel (V)

— mit (4i) einem hydroxylierten Reaktanten der Formel

$$M\text{—}OH \qquad (VI)$$

worin das Symbol M die vorstehend für Formeln (I) angebenen allgemeinen Bedeutungen besitzt,

— um das gewünschte Polymere der Formel (I) zu erhalten,

. dann wird das entstandene Polymere der Formel (I) aus dem Reaktionsmilieu in bekannter Weise abgetrennt.

2. Verfahren gemäß Anspruch 1, dadurch gekennzeichnet, daß die Symbole X, $R_1$, $R_2$, $R_3$, $R_4$, $R_5$, M, n, m, p und x die folgenden bevorzugten Bedeutungen haben:

— die Symbole X, die identisch oder verschieden sind, bedeuten jeweils eine endständige funktionelle Hydroxyl- oder Carboxylgruppe;

— $R_1$, $R_2$ und $R_3$, die identisch oder verschieden sind, bedeuten jeweils ein Wasserstoffatom oder einen Methylrest;

— $R_4$ und $R_5$, die identisch oder verschieden sind, bedeuten jeweils einen linearen Alkylrest mit 1 bis 3 Kohlenstoffatomen wie einen Methyl-, Ethyl- oder n-Propylrest; einen Phenylrest;

— die Symbole M, die identisch oder verschieden sind, bedeuten jeweils einen Rest der Formel:

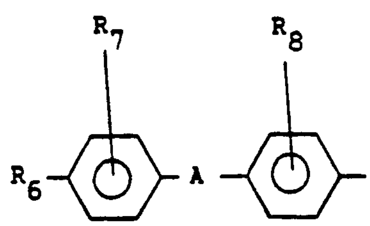

(II)

worin:

* A eine einfache Valenzbindung oder einen Rest bedeutet;

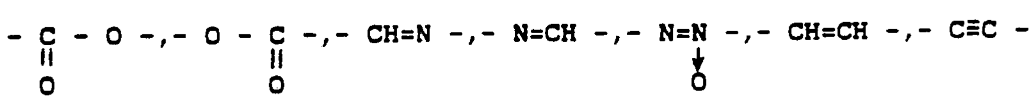

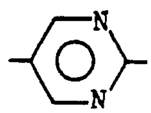 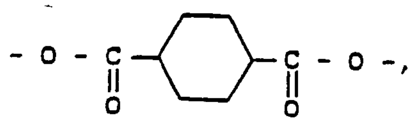 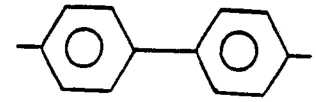

* $R_6$ bedeutet den Rest B, den Rest

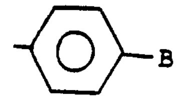

oder den Rest

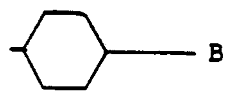

worin B und B′ jeweils sind: ein Wasserstoffatom, ein Rest —O—$(CH_2)_yH$, ein Rest —$COO(CH_2)_yH$, ein Rest —CO—$(CH_2)_yH$ mit Y ist gleich eine ganze Zahl in dem Bereich von 1 bis 8, —CN oder —$NO_2$;

* $R_7$ und $R_8$, die identisch oder verschieden sind, bedeuten jeweils ein Wasserstoffatom oder einen linearen oder verzweigten Alkylrest mit 1 bis 4 Kohlenstoffatomen;

— die Symbole n, m und p bedeuten mittlere Zahlen, die untereinander durch die folgenden Beziehugen verbunden sind:

* die Summe n + n + p liegt in dem Bereich von 10 bis 1000;
* das Verhältnis $r_1$ liegt in dem Bereich von 0 bis 0,5;
* das Verhältnis $r_2$ liegt in dem Bereich von 0,2 bis 1;

— das Symbol x ist eine ganze Zahl in dem Bereich von 2 bis 6.

3. Verfahren gemäß Anspruch 2, dadurch gekennzeichnet, daß die Symbole $R_1$, $R_2$ und $R_3$ ein Wasserstoffatom bedeuten, und die Symbole M, die identisch oder verschieden sind, bedeuten jeweils eine sogenannte mesogene Gruppe der Formel (II) der Struktur

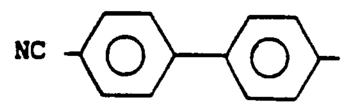

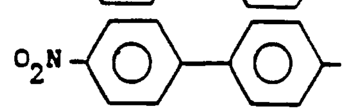

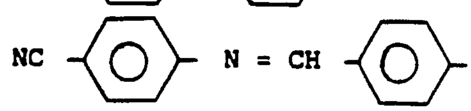

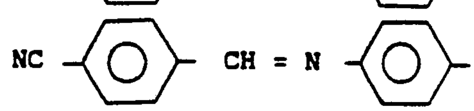

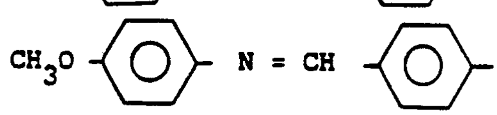

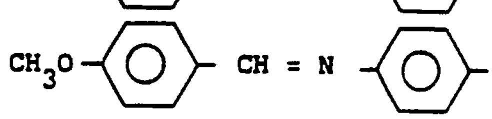

4. Verfahren gemäß einem der Ansprüche 1 bis 3, dadurch gekennzeichnet, daß die Stufe (a) in homogenem Milieu durchgeführt wird, durch Zugabe eines Lösungsmittels oder Lösungsmittelgemisches, das dem Polymeren der Formel (III) und dem bromierten Silan der Formel (IV) gemeinsam ist, zu den Ausgangsreaktionsteilnehmern.

5. Verfahren gemäß Anspruch 4, dadurch gekennzeichnet, daß die verwendeten Lösungsmittel Tetrahydrofuran, Benzol, Toluol, Hexan, Tetrachlorkohlenstoff sind.

6. Verfahren gemäß einem der Ansprüche 1 bis 5, dadurch gekennzeichnet, daß die Stufe (a) bei einer Temperatur von Umgebungstemperatur (23°C) bis 70°C durchgeführt wird.

7. Verfahren gemäß einem der Ansprüche 1 bis 6, dadurch gekennzeichnet, daß die in der Stufe (a) die Anzahl der Mole bromiertes Silan der Formel (IV), welche pro Mol Polymere der Formel (III) zugesetzt wird, gleich der Zahl der anhängenden Unsättigungen vom Vinyltyp, welche in einem Mol Polymeres enthalten sind, auf die man das bromierte Silan züfügen möchte, gegebenenfalls erhöht um einen Überschuß von 5 bis 15% im Falle, daß man die Gesamtheit oder einen sehr großen Anteil der Vinylunsättigungen zu sättigen wünscht.

8. Verfahren gemäß einem der Ansprüche 1 bis 7, dadurch gekennzeichnet, daß die Stufe (b) in

Gegenwart eines Lösungsmittel oder Lösungsmittelgemisches durchgeführt wird, das dem Polymeren der Formel (V) und dem Hydroxylierten Reaktanten der Formel (VI) und einem basischen Mittel gemeinsam.

9. Verfahren gemäß einem der Ansprüche 1 bis 8, dadurch gekennzeichnet, daß die Stufe (b) bei einer Temperatur in dem Bereich von 60 bis 150°C durchgeführt wird.

10. Verfahren gemäß einem der Ansprüche 1 bis 9, dadurch gekennzeichnet, daß die in der Stufe (b) die Anzahl der des hydroxylierten Reaktionsteilnehmers (4i), die pro Mol Polymeres der Formel (V) zugesetzt wird, gleich der Anzahl der bromierten Seitenkettenglieder ist, die in einem Mol des genannten Polymeren, erhöht um einen Überschuß von 5 bis 15%, enthalten sind.

11. Geformte Erzeugnisse wie Formstücke, Fäden und Filme aus den Polymeren, hergestellt gemäß dem Verfahren nach einem der Ansprüche 1 bis 10, wobei diese Polymeren gegebenenfalls falls mittels vorhandener, nicht-gesättigter ethylenischer Umsättigungen sowie gegebenenfalls vorhandener endständiger funktioneller Gruppen polymerisiert oder vernetzt sind.

**Claims for the Contracting States: AT BE CH DE FR GB IT LI LU NL SE**

1. Liquid crystal polymers bearing mesogenic side groups, characterized in that they correspond essentially to the general formula:

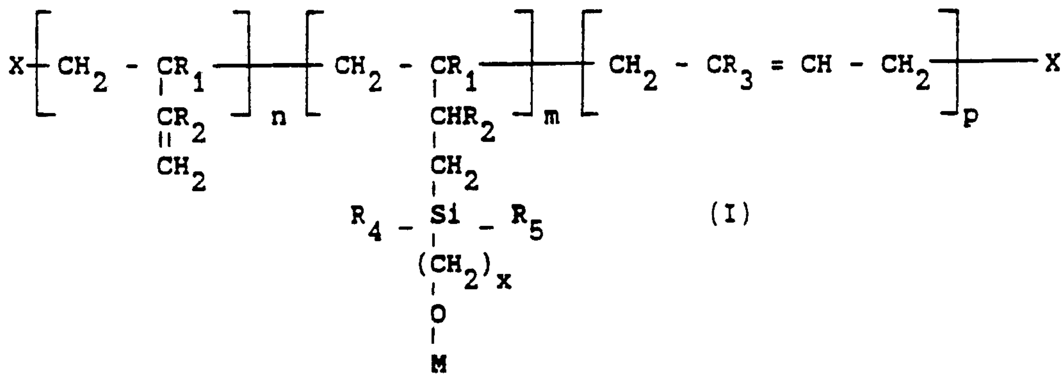

(I)

in which:

— the symbols X, which may be identical or different, each denote a hydrogen atom or a terminal hydroxyl, carboxyl or amino functional group;

— $R_1$, $R_2$ and $R_3$, which may be identical or different, each denote a hydrogen atom, a chlorine atom or a methyl radical;

— $R_4$ and $R_5$, which may be identical or different, each denote a monovalent hydrocarbon radical chosen from: linear or branched alkyl radicals having from 1 to 6 carbon atoms; and a phenyl radical optionally substituted with one or more alkyl and/or alkoxy radicals having from 1 to 4 carbon atoms;

— the symbols M, which may be identical or different, each denote a group which is properly called mesogenic or a group capable of generating the mesogenic property after grafting;

— the symbols n, m and p, which may be identical or different, denote the average numbers of the different statistically arranged repeated units, these numbers being linked to one another by the following relationships:

* the sum $n + m + p$ falls within the range from 10 to 20,000;
* the ratio $r_1 = p/(n + m + p)$ falls within the range from 0 to 0.9, and
* the ratio $r_2 = m/(n + m)$ falls within the range from 0.01 to 1;

— the symbol x is an integer falling within the range from 0 to 8.

2. Polymers according to claim 1, characterized in that they correspond to the formula (I) in which:

— the symbols X, which may be identical or different, each denote a terminal hydroxyl or carboxyl functional group;

— $R_1$, $R_2$ and $R_3$, which may be identical or different, each denote a hydrogen atom or a methyl radical;

— $R_4$ and $R_5$, which may be identical or different, each denote: a linear alkyl radical having from 1 to 3 carbon atoms, such as methyl, ethyl or n-propyl radical; or a phenyl radical;

— the symbols M, which may be identical or different, each denote a radical of formula:

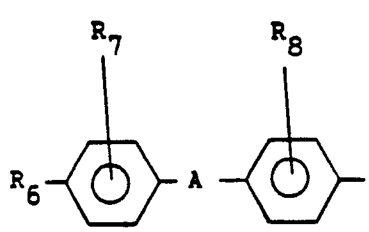

(II)

in which:

* A denotes a single valency bond or residue

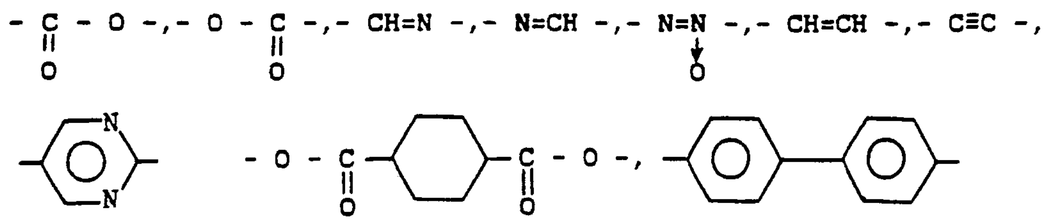

* $R_6$ denotes a radical B, a radical

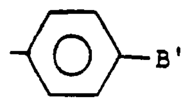

or a radical

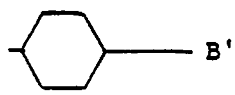

in which B and B′ are each: a hydrogen atom, a residue $-O-(CH_2)_yH$, a residue $-COO(CH_2)_yH$ or a residue $-CO-(CH_2)_yH$, with y being an integer falling within the range from 1 to 8, $-CN$ or $-NO_2$;

* $R_7$ and $R_8$, which may be identical or different, each denote a hydrogen atom or linear or branched alkyl radical having from 1 to 4 carbon atoms;

— the symbols n, m and p denote average numbers which are linked to one another by the following relationships;

* the sum n + m + p falls within the range from 10 to 1,000;
* the ratio $r_1$ falls within the range from 0 to 0.5, and
* the ratio $r_2$ falls within the range from 0.2 to 1,

— the symbol x is an integer falling within the range from 2 to 6.

3. Polymers according to claim 2, characterised in that they are compounds in which $R_1$, $R_2$ and $R_3$ denote a hydrogen atom and the symbols M, which may be identical or different, each denote a group which is properly called mesogenic and corresponds to the formula (II) of structure:

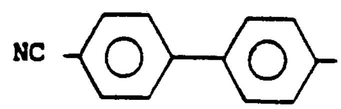

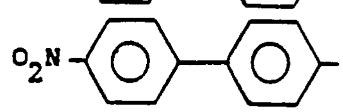

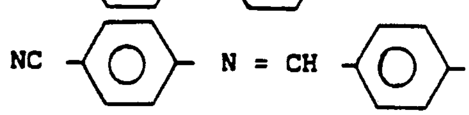

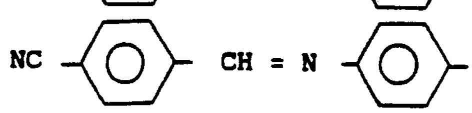

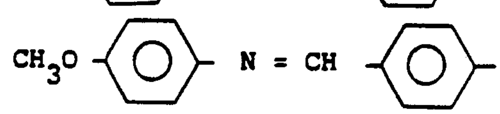

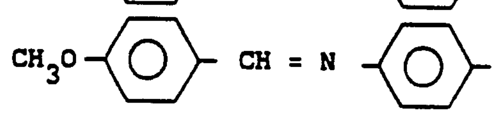

4. Process for producing the liquid crystal polymers according to any one of claims 1 to 3, characterized in that it comprises the following stages:

(a) . reacting in the presence of a hydrosilylation catalyst:

— (i) a polymer of formula:

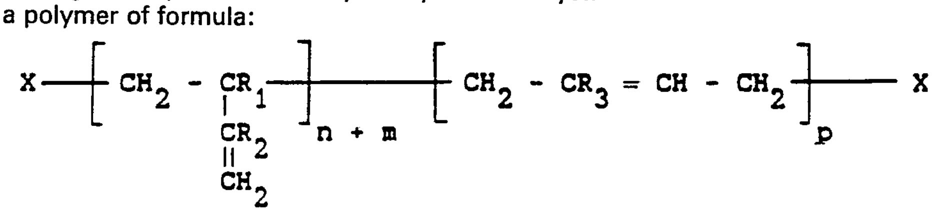

(III)

in which the symbols X, $R_1$, $R_2$ and $R_3$, the sum of n + m + p and the ratio $r_1 = p/(n + m + p)$ have the general or preferred meanings stated above in one of claims 1 to 3 in relation to the formula (I)

— with (ii) a (bromoalkyl)diorganosilane of formula:

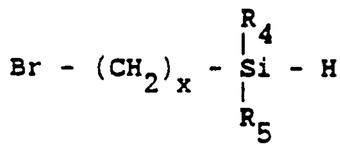

(IV)

in which the symbols $R_4$, $R_5$ and x have the general or preferred meanings stated above in one of claims 1 to 3 in relation to the formula (I),

— to obtain a precursor polymer of formula:

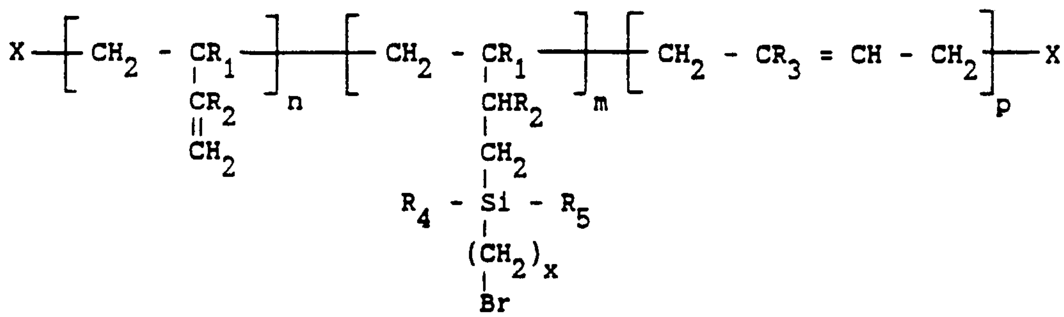

(V)

in which the symbols X, $R_1$, $R_2$, $R_3$, $R_4$, $R_5$ and x, the sum n + m + p and the ratios $r_1 = p/(n + m + p)$ and $r_2 = m/(n + m)$ have the general or preferred meanings stated above in one of claims 1 to 3 in relation to the formula (I),

. then precipitating the said precursor polymer by adding a non-solvent or mixture of non-solvents to the reaction medium and separating the precipitated polymer from the reaction medium;

(b) . thereafter reacting in the presence of a phase transfer catalyst;

— (iii) the precursor polymer of formula (V)

— with (iv) a hydroxylated reactant of formula:

$$M—OH \qquad (VI)$$

in which the symbol M posseses the general or special meanings given above in one of claims 1 to 3 in relation to the formulae (I) and (II),

— to obtain the desired polymer of formula (I),

. then separating, in a manner known per se, the resulting said polymer of formula (I) from the reaction medium.

5. Process according to claim 4, characterised in that the stage (a) is performed in homogeneous medium by adding, to the starting reactants, a solvent or mixture of solvents common to the polymer of formula (III) and to the brominated silane of formula (IV).

6. Process according to claim 5, characterised in that the solvents used are tetrahydrofuran, benzene, toluene, hexane and carbon tetrachloride.

7. Process according to any one of claims 4 to 6, characterized in that the stage (a) is performed at a temperature ranging from room temperature (23°C) to 70°C.

8. Process according to any one of claims 4 to 6, characterized in that, in the stage (a), the number of moles of brominated silane of formula (IV) added per mole of polymers of formula (III) is equal to the number of pendant unsaturations of the vinyl type present in one mole of polymer to which it is desired to add the said brominated silane, optionally increased by an excess of 5 to 15% in the case where it is desired to saturate all or a very large proportion of the vinyl unsaturations.

9. Process according to any one of claims 4 to 8, characterized in that the stage (b) is performed in the presence of a solvent or mixture of solvents common to the polymer of formula (V) and to the hydroxylated reactant of formula (VI), and of a basic agent.

10. Process according to any one of claims 4 to 9, characterized in that the stage (b) is performed at a temperature falling within the range from 60 to 150°C.

11. Process according to any one of claims 4 to 10, characterized in that, in the stage (b), the number of moles of hydroxylated reactant (iv) added per mole of polymer of formula (V) is equal to the number of brominated side chains present in one mole of the said polymer, increased by an excess of 5 to 15%.

12. Shaped articles such as moulded items, threads and films derived from the polymers according to any one fo claims 1 to 3, these polymers optionally being polymerized or crosslinked by means of the ethylenic unsaturations present which are not saturated, as well as the possible terminal functional groups.

**Claims for the Contracting State: ES**

1. Process for preparing liquid crystal polymers bearing mesogenic side groups, which correspond essentially to the general formula:

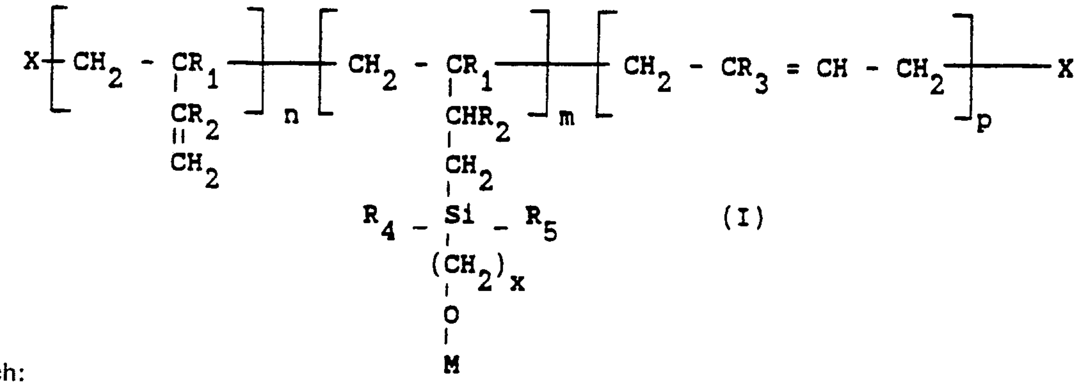

(I)

in which:

— the symbols X, which may be identical or different, each denote a hydrogen atom or a terminal hydroxyl, carboxyl or amino functional group;

— $R_1$, $R_2$ and $R_3$, which may be identical or different, each denote a hydrogen atom, a chlorine atom or a methyl radical;

— $R_4$ and $R_5$, which may be identical or different, each denote a monovalent hydrocarbon radical chosen from: linear or branched alkyl radicals having from 1 to 6 carbon atoms; and a phenyl radical optionally substituted with one or more alkyl and/or alkoxy radicals having from 1 to 4 carbon atoms;

— the symbols M, which may be identical or different, each denote a group which is properly called mesogenic or a group capable of generating the mesogenic property after grafting;

— the symbols n, m and p, which may be identical or different, denote the average numbers of the different statistically arranged repeated units, these numbers being linked to one another by the following relationships:

* the sum n + m + p falls within the range from 10 to 20,000,
* the ratio $r_1 = p/(n + m + p)$ falls within the range from 0 to 0.9, and
* the ratio $r_2 = m/(n + m)$ falls within the range from 0.1 to 1;

— the symbol x is an integer falling within the range from 0 to 8;

this process being characterized in that it comprises the following stages:

(a) . reacting in the presence of a hydrosilylation catalyst:

— (i) a polymer of formula:

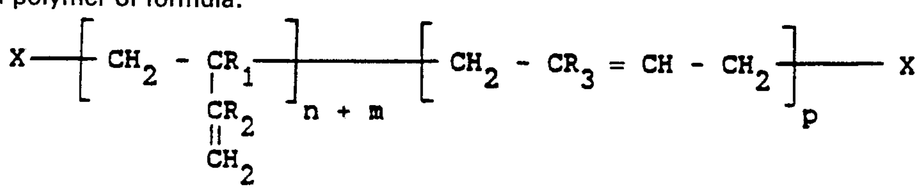

(III)

in which the symbols X, $R_1$, $R_2$ and $R_3$, the sum of n + m + p and the ratio $r_1 = p/(n + m + p)$ have the general meanings stated above in relation to the formula (I)

— with (ii) a (bromoalkyl)diorganosilane of formula:

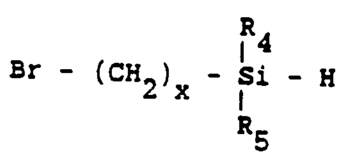

(IV)

in which the symbols $R_4$, $R_5$ and x have the general meanings stated above in relation to the formula (I),

— to obtain a precursor polymer of formula:

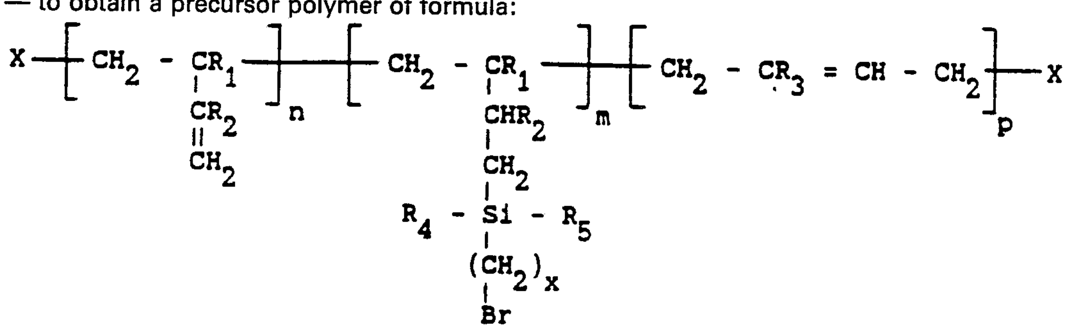

(V)

in which the symbols X, $R_1$, $R_2$, $R_3$, $R_4$, $R_5$ and x, the sum n + m + p and the ratios $r_1 = p/(n + m + p)$ and $r_2 = m/(n + m)$ have the general meanings stated above in relation to the formula (I),

. then precipitating the said precursor polymer by adding a non-solvent or mixture of non-solvents to the reaction medium and separating the precipitated polymer from the reaction medium;

(b) . thereafter reacting in the presence of a phase transfer catalyst;

— (iii) the precursor polymer of formula (V)

— with (iv) a hydroxylated reactant of formula:

$$M\text{—}OH \qquad (VI)$$

in which the symbol M posseses the general meanings given above in relation to the formula (I),

— to obtain the desired polymer of formula (I),

. then separating, in a manner known per se, the resulting said polymer of formula (I) from the reaction medium.

2. Process according to claim 1, characterized in that the symbols X, $R_1$, $R_2$, $R_3$, $R_4$, $R_5$, M, n, m, p and x have the following preferred meanings:

— the symbols X, which may be identical or different, each denote a terminal hydroxyl or carboxyl functional group;

— $R_1$, $R_2$ and $R_3$, which may be identical or different, each denote a hydrogen atom or a methyl radical;

— $R_4$ and $R_5$, which may be identical or different, each denote: a linear alkyl radical having from 1 to 3 carbon atoms, such as a methyl, ethyl or n-propyl radical; or a phenyl radical;

— the symbols M, which may be identical or different, each denote a radical of formula:

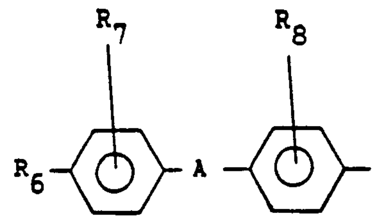

(II)

in which:

* A denotes a single valency bond or a residue

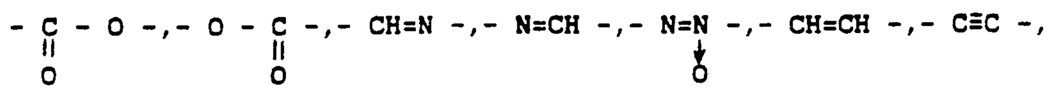

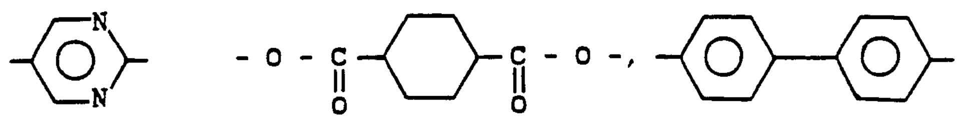

* $R_6$ denotes a radical B, a radical

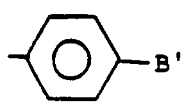

or a radical

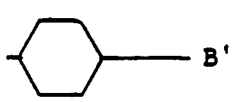

in which B and B' are each: a hydrogen atom, a residue —O—$(CH_2)_yH$, a residue —$COO(CH_2)_yH$ or a residue —CO—$(CH_2)_y$, with y being an integer falling within the range from 1 to 8, —CN or —$NO_2$;

* $R_7$ and $R_8$, which may be identical or different, each denote a hydrogen atom or linear or branched alkyl radical having from 1 to 4 carbon atoms;

— the symbols n, m and p denote average numbers which are linked to one another by the following relationships:

* the sum n + m + p falls within the range from 10 to 1,000;

* the ratio $r_1$ falls within the range from 0 to 0.5,

* the ratio $r_2$ falls within the range from 0.2 to 1,

— the symbol x is an integer falling within the range from 2 to 6.

3. Process according to claim 2, characterised in that the symbols $R_1$, $R_2$ and $R_3$ denote a hydrogen atom and the symbols M, which may be identical or different, each denote a group which is properly called mesogenic and corresponds to the formula (II) of structure:

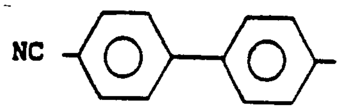

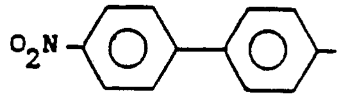

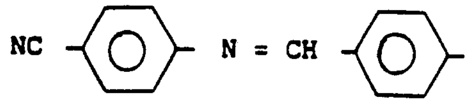

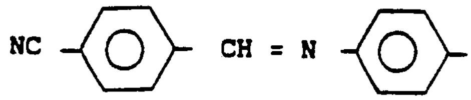

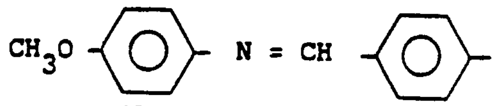

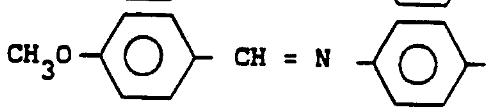

4. Process according to any one of claims 1 to 3, characterised in that the stage (a) is performed in homogeneous medium by adding, to the starting reactants, a solvent or mixture of solvents common to the polymer of formula (III) and to the brominated silane of formula (IV).

5. Process according to claim 4, characterised in that the solvents used are tetrahydrofuran, benzene, toluene, hexane and carbon tetrachloride.

6. Process according to any one of claims 1 to 5, characterized in that the stage (a) is performed at a temperature ranging from room temperature (23°C) to 70°C.

7. Process according to any one of claims 1 to 6, characterized in that, in the stage (a), the number of moles of brominated silane of formula (IV) added per mole of polymers of formula (III) is equal to the number of pendant unsaturations of the vinyl type present in one mole of polymer to which it is desired to add the said brominated silane, optionally increased by an excess of 5 to 15% in the case where it is desired to saturate all or a very large proportion of the vinyl unsaturations.

8. Process according to any one of claims 1 to 7, characterized in that the stage (b) is performed in the presence of a solvent or mixture of solvents common to the polymer of formula (V) and to the hydroxylated reactant of formula (VI), and of a basic agent.

9. Process according to any one of claims 1 to 8, characterized in that the stage (b) is performed at a temperature falling within the range from 60 to 150°C.

10. Process according to any one of claims 1 to 9, characterized in that, in the stage (b), the number of moles of hydroxylated reactant (iv) added per mole of polymer of formula (V) is equal to the number of brominated side chains present in one mole of the said polymer, increased by an excess of 5 to 15%.

11. Shaped articles such as moulded articles, threads and films derived from the polymers according to the process according to any one of claims 1 to 10, these polymers optionally being polymerized or crosslinked by means of the ethylenic unsaturations present which are not saturated, as well as the possible terminal functional groups.